# EUROPEAN PATENT APPLICATION

(11) **EP 4 191 490 A1**
(43) Date of publication of application: **07.06.2023**
(21) Application number: 22195573.5
(22) Date of filing: 14.09.2022
(51) Int. Cl.: G06Q 10/0639, G06Q 10/0631, G06Q 50/04, G05B 19/00, G05B 19/418

(54) **STORAGE MEDIUM, INFORMATION PROCESSING METHOD, AND INFORMATION PROCESSING APPARATUS**

(30) Priority: 06.12.2021 JP 2021197818
(71) Applicant: FUJITSU LIMITED, Kawasaki-shi, Kanagawa 211-8588 (JP)
(72) Inventor: Takita, Yutaka, Kawasaki-shi, Kanagawa, 211-8588 (JP)
(74) Representative: Hoffmann Eitle

(57) **Abstract**

An information processing program that causes a computer to execute a process that includes acquiring first information for specifying time slots for extracting articles to be inspected from an inspection aspect from a work facility that handles a plurality of articles; acquiring second information for specifying an article being inspected, an article waiting for inspection, and an article not allowed to wait; when a first time slot in which there is an article not allowed to wait exists, searching for a second time slot which exists before the first time slot; and when the second time slot is searched out, changing, in the first information, a time slot after the second time slot for extracting an article to be inspected from one of the plurality of inspection aspects among the plurality of time slots, into a time slot before the second time slot.

## Description

### FIELD

The embodiments discussed herein are related to a storage medium, an information processing method, and an information processing apparatus.

### BACKGROUND

Heretofore, there has been a case where one of products flowing in a production line is extracted as a sample and inspected from any of multiple aspects (inspection items). For example, the product is transferred to and inspected in an inspection facility. For example, when the inspection facility is occupied, the product is transferred to and stored in a standby facility. For example, a plan for each inspection aspect is created in which products to be inspected from the concerned aspect are scheduled to be extracted from a production line and inspected at regular time intervals.

As related art, there are the following techniques. For example, in one technique, whether or not loading of production work including inspection of products and maintenance work of manufacturing apparatuses reaches a production target is determined based on a production plan for articles to be processed, and if the production target is not reached and the states of the manufacturing apparatuses are determined as stable, a frequency of inspection or maintenance is set to a looser condition. For example, in another technique, a schedule is optimized for each scheduling model created based on step data on steps rearranged in a reverse order, from downstream to upstream. For example, in still another technique, in a case where at least q lots fail inspection among i consecutive lots immediately preceding to a non-inspection target lot determined based on a frequency of skipping an inspection step, a next non-inspection target lot is changed to an inspection target lot.

Japanese Laid-open Patent Publication Nos. 11-170144, 2007-183817, and 2012-058816 are disclosed as related art.

### SUMMARY

### [TECHNICAL PROBLEM]

There is a case where the plan created in the related art stops a production line while products are inspected in accordance with the plan. For example, when a product to be inspected from any aspect is extracted from a production line, there is a problem that the production line has to be stopped if the inspection facility is occupied and the standby facility is occupied.

According to one aspect, an object of the present disclosure is to reduce stopping of a work facility.

### [SOLUTION TO PROBLEM]

According to an aspect of the embodiments, an information processing program that causes at least one computer to execute a process, the process includes acquiring first information for specifying, for each of a plurality of inspection aspects, time slots for extracting articles to be inspected from an inspection aspect from a work facility that sequentially handles a plurality of articles among a plurality of consecutive time slots; acquiring second information for specifying, in each of the plurality of time slots, an article being inspected in an inspection facility, an article waiting for inspection in a standby facility, and an article not allowed to wait in the standby facility; when a first time slot in which there is an article not allowed to wait in the standby facility exists among the plurality of time slots based on the acquired second information, searching for a second time slot which exists before the first time slot and in which the inspection facility is unoccupied; and when the second time slot is searched out, changing, in the first information, a time slot after the second time slot for extracting an article to be inspected from one of the plurality of inspection aspects among the plurality of time slots, into a time slot before the second time slot.

### [ADVANTAGEOUS EFFECTS OF INVENTION]

According to an embodiment, it is possible to reduce stopping of a work facility.

### BRIEF DESCRIPTION OF DRAWINGS

FIG. 1 is an explanatory diagram illustrating an example of an information processing method according to an embodiment;
FIG. 2 is an explanatory diagram illustrating an example of an information processing system;
FIG. 3 is a block diagram illustrating a hardware configuration example of an information processing apparatus;
FIG. 4 is an explanatory diagram illustrating an example of information stored in a work facility management table;
FIG. 5 is an explanatory diagram illustrating an example of information stored in an inspection target management table;
FIG. 6 is an explanatory diagram illustrating an example of information stored in an inspection status management table;
FIG. 7 is a block diagram illustrating a functional configuration example of the information processing apparatus;
FIG. 8 is an explanatory diagram (part 1) illustrating an example of determining time slots for extracting products to be inspected from each aspect;
FIG. 9 is an explanatory diagram (part 2) illustrating the example of determining the time slots for extracting products to be inspected from each aspect;
FIG. 10 is an explanatory diagram (part 1) illustrating an example of detecting a time slot in which an overflow occurs;
FIG. 11 is an explanatory diagram (part 2) illustrating an example of detecting time slots in which overflows occur;
FIG. 12 is an explanatory diagram illustrating the example of identifying an unoccupied time slot in which an inspection facility is unoccupied.
FIG. 13 is an explanatory diagram (part 1) illustrating an example of advancing time slots for extracting products to be inspected from any of aspects;
FIG. 14 is an explanatory diagram (part 2) illustrating the example of advancing the time slots for extracting the products to be inspected from any of aspects;
FIG. 15 is an explanatory diagram (part 3) illustrating the example of advancing the time slots for extracting the products to be inspected from any of aspects;
FIG. 16 is an explanatory diagram (part 4) illustrating the example of advancing the time slots for extracting the products to be inspected from any of aspects;
FIG. 17 is an explanatory diagram (part 5) illustrating the example of advancing the time slots for extracting the products to be inspected from any of aspects;
FIG. 18 is an explanatory diagram (part 6) illustrating the example of advancing the time slots for extracting the products to be inspected from any of aspects;
FIG. 19 is a flowchart illustrating an example of a procedure of an overall processing; and
FIG. 20 is a flowchart illustrating an example of a procedure of an adjustment processing.

### DESCRIPTION OF EMBODIMENTS

Hereinafter, embodiments of an information processing program, an information processing method, and an information processing apparatus according to the present disclosure will be described in detail with reference to the drawings.

### (Example of Information Processing Method According to Embodiment)

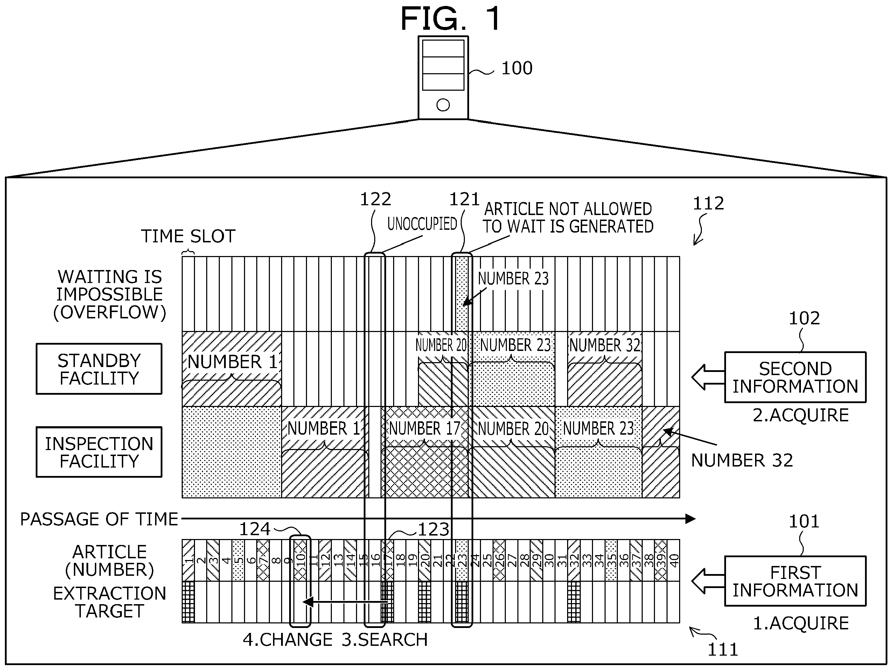

FIG. 1 is an explanatory diagram illustrating an example of an information processing method according to an embodiment. An information processing apparatus 100 is a computer for appropriately adjusting the timing of extracting articles to be inspected from any aspect among multiple aspects from a work facility that sequentially handles multiple articles.

For example, the multiple articles include an article that may be a target to be inspected from any aspect. The multiple articles may include an article that may be a target to be inspected from two or more aspects. For example, the multiple articles may include an article that may not be a target to be inspected from any aspect. The articles are, for example, machine products and the like. Examples of the machine products include home appliances, vehicles, machine tools, and the like. A state of an article may be sequentially changed. For example, an article may be a frame of a machine product in an initial state. In an intermediate state, the article may be the frame of the machine product to which some parts are attached. In a final state, the article may be the completed machine product.

For example, the article is transferred to and inspected in an inspection facility. For example, the inspection is to determine whether or not a specific function of the article is normal. For example, the inspection is to determine whether or not each part is normally attached to the machine product. For example, the inspection may be to determine whether or not an unpainted portion remains in the painting of the machine product. For example, the inspection may be to determine whether or not the durability of the machine product satisfies a prescribed condition. For example, when the inspection facility is occupied, the article is transferred to and stored in a standby facility. Then, when the inspection facility is unoccupied, the article is transferred to and inspected in the inspection facility.

A work facility is, for example, a production line or the like on which workers or machines sequentially handle multiple articles to complete the multiple articles. For example, the work facility is a production line for sequentially producing multiple machine products. For example, the work facility is a production line for sequentially processing multiple machine products. Examples of the processing include attaching parts to a machine product, painting a machine product, or the like.

The inspection facility is, for example, an inspection station or the like that is capable of inspecting an article from each aspect. For example, the inspection facility is an inspection station or the like that is capable of inspecting a machine product from each aspect. In the inspection facility, for example, the inspections from the respective aspects may request an equal length of time. In the inspection facility, for example, the inspections from the respective aspects may request different lengths of time. The standby facility is, for example, a storage place or the like where an article is stored. For example, the standby facility is a storage place or the like where a machine product is stored.

There is a case where it is desired to perform the quality control of articles by extracting an article to be inspected from each aspect from a work facility and inspecting the article from the concerned aspect at regular time intervals while operating the work facility without stopping it. In order to achieve appropriate quality control of articles, for each aspect, an upper limit of a time interval at which articles to be inspected from the concerned aspect are to be extracted from the work facility tends to be set. The values of the upper limits set for the respective aspects may be, for example, an equal value. The values of the upper limits set for the respective aspects may be, for example, different values. Since the inspection requests personnel cost, money cost, electricity cost, resource cost, location cost, or time cost, it is considered preferable that the number of articles extracted be minimized.

For example, in the related art, a plan for each of aspects to extract articles to be inspected from the concerned aspect from the work facility and inspect the articles from the concerned aspect is created such that the number of the articles extracted may be minimized within a range in which the time interval for extracting the articles to be inspected from the concerned aspect from the work facility does not exceed the upper limit. For example, it is conceivable to actually extract articles to be inspected from all the aspects from the work facility in accordance with the created plan while operating the work facility.

When articles to be inspected from all the aspects from the work facility are extracted in accordance with the created plan, there is a case where the work facility is stopped. For example, there is a problem that the work facility has to be stopped when the inspection facility is occupied and the standby facility is occupied at the timing for extracting an article to be inspected from any of the aspects from the work facility in accordance with the created plan.

To address this, for example, a method is conceivable in which an inspection facility or a standby facility is added so as to avoid a situation in which both of the inspection facility and the standby facility are occupied at the timing for extracting an article to be inspected from any of the aspects. This method has a problem that an inspection facility or a standby facility is additionally installed and maintained, which leads to an increase in personnel cost, money cost, electricity cost, resource cost, location cost, or time cost. Accordingly, there is a case where this method is difficult to implement.

For example, another method is conceivable in which, if both of the inspection facility and the standby facility are occupied at the timing for extracting an article to be inspected from any of the aspects, the extraction of the article is canceled or postponed. In this method, there is a case where a time interval for extracting articles to be inspected from any of the aspects from the work facility exceeds the upper limit, which makes it impossible to achieve appropriate quality control of the articles.

In view of these, in the present embodiment, description will be given of an information processing method which is capable of appropriately adjusting the timing for extracting articles to be inspected from each of multiple aspects from a work facility so as to reduce the stopping of the work facility.

In FIG. 1, for example, there is one inspection facility. For example, there is one standby facility. For example, there is one work facility. For example, there are four inspection aspects. The work facility handles, for example, multiple articles. For example, the multiple articles are multiple articles numbered 1 to 40, respectively. For example, the multiple articles include an article that may be an inspection target to be inspected from any one of the four aspects. For example, the multiple articles may include an article that may not be an inspection target to be inspected from any aspect.

(1-1) The information processing apparatus 100 acquires first information 101. The first information 101 is information with which time slots for each aspect for extracting articles to be inspected from the concerned aspect from the work facility are identifiable among multiple consecutive time slots.

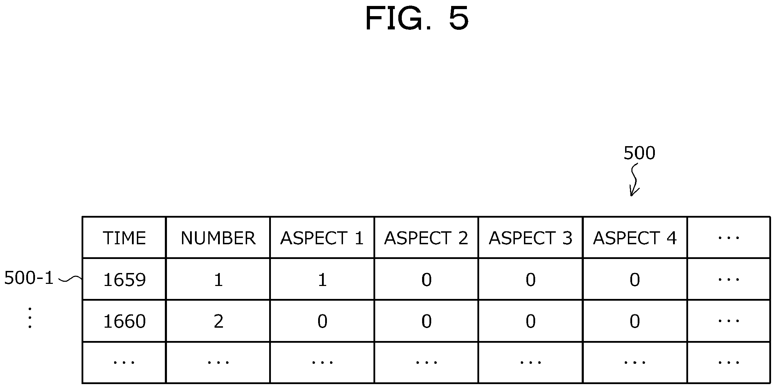

For example, as presented in reference sign 111, the first information 101 identifiably specifies a number identifying an extractable article, an aspect inspectable on the extractable article, and information on whether or not the extractable article is set as an extraction target for each of time slots along with the passage of time. For example, the first information 101 is formed as an inspection target management table 500 described later in FIG. 5.

In the example illustrated in FIG. 1, the aspects inspectable on articles are indicated by different types of hatches. For example, a downward-sloping hatch indicates the aspect 1. For example, an upward-sloping hatch indicates the aspect 2. For example, a dot hatch indicates the aspect 3. For example, a cross hatch indicates the aspect 4. An extraction target article is indicated by a mesh hatch.

For example, the information processing apparatus 100 acquires the first information 101 by generating the first information 101. For example, the information processing apparatus 100 generates the first information 101 by identifying, for each aspect, one or more time slots for extracting articles to be inspected from the concerned aspect among the multiple time slots, within a range in which the time interval for extracting the articles to be inspected from the concerned aspect does not exceed the upper limit. In this processing, for example, it is preferable that the information processing apparatus 100 identify, for each aspect, one or more time slots for extracting articles to be inspected from the concerned aspect among the multiple time slots so that the number of extractions of the articles to be inspected from the concerned aspect may be minimized.

(1-2) The information processing apparatus 100 acquires second information 102 with which an article being inspected in the inspection facility, an article waiting for inspection in the standby facility, and an article not allowed to wait for inspection in the standby facility in each of the multiple time slots are identifiable.

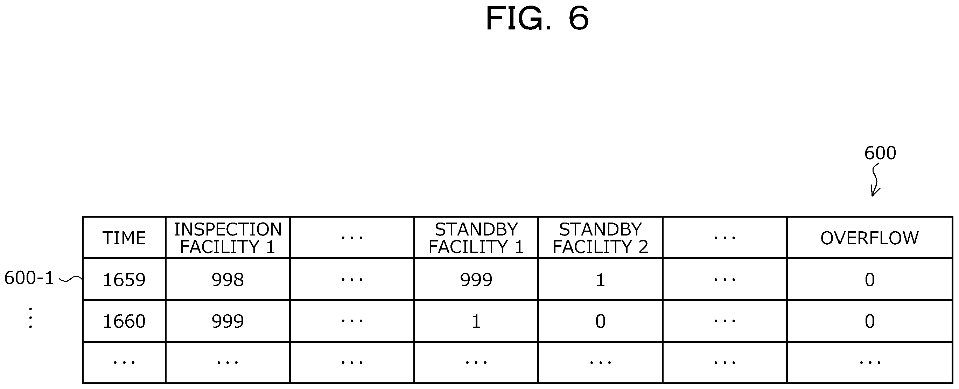

For example, as presented in reference sign 112, the second information 102 identifiably specifies a number identifying an article being inspected in the inspection facility, a number identifying an article waiting in the standby facility, and a number identifying an article not allowed to wait in the standby facility for each of the time slots along the passage of time. For example, the second information 102 is formed as an inspection status management table 600 described later in FIG. 6.

For example, the information processing apparatus 100 acquires the second information 102 by generating the second information 102. For example, the information processing apparatus 100 generates the second information 102 by executing a simulation based on the first information 101, the simulation including extracting articles from the work facility and moving each of the articles to the inspection facility or the standby facility.

(1-3) The information processing apparatus 100 determines whether or not a first time slot in which an article not allowed to wait in the standby facility is generated exists among the multiple time slots based on the acquired second information 102. For example, in the example illustrated in FIG. 1, the information processing apparatus 100 determines that a first time slot 121 in which an article with the number 23 not allowed to wait in the standby facility is generated exists.

When the first time slot exists, the information processing apparatus 100 searches the multiple time slots for a second time slot which exists before the first time slot and in which the inspection facility is unoccupied. For example, in the example illustrated in FIG. 1, the information processing apparatus 100 searches out a second time slot 122 in which the inspection facility is unoccupied. When any first time slot in which an article not allowed to wait in the standby facility is generated does not exist, the information processing apparatus 100 may skip the following processing.

(1-4) When the second time slot is searched out, the information processing apparatus 100 changes the first information 101 by advancing a time slot which exists after the second time slot among the multiple time slots and which is for extracting an article to be inspected from a first aspect included in the multiple aspects. For example, the first aspect may be any of the multiple aspects. For example, the first aspect may be limited to any of the multiple aspects. To advance means to change a certain time slot for extracting an article to be inspected from a certain aspect to another time slot before the certain time slot.

For example, the information processing apparatus 100 changes the first information 101 such that a time slot which exists after the second time slot among the multiple time slots and which is for extracting an article to be inspected from the first aspect in the multiple aspects is changed to a time slot before the second time slot. For example, in the example illustrated in FIG. 1, the information processing apparatus 100 changes a time slot 123 which exists after the second time slot 122 and which is for extracting an article to be inspected from the aspect 4 to a time slot 124 which exists before the second time slot 122 and in which an article with the number 10 inspectable from the aspect 4 is extractable.

In this way, the information processing apparatus 100 is capable of appropriately adjusting time slots for extracting articles to be inspected from any of the multiple aspects from the work facility so as not to stop the work facility. Consequently, the information processing apparatus 100 is capable of suppressing an increase in the money cost, electricity cost, resource cost, location cost, or time cost due to the stopping of the work facility.

For example, for each aspect, the information processing apparatus 100 is capable of enabling extraction of articles to be inspected from the concerned aspect from the work facility, within a range in which the time interval for extracting the articles to be inspected from the concerned aspect does not exceed the upper limit, while operating the work facility without stopping it. Therefore, for example, the information processing apparatus 100 is capable of avoiding additional installation of an inspection facility and a standby facility, and thereby reducing the money cost, electricity cost, resource cost, location cost, or time cost. For example, the information processing apparatus 100 is capable of enabling appropriate quality control of articles.

In this processing, the information processing apparatus 100 is capable of enabling extraction of articles to be inspected from the concerned aspect from the work facility so that the number of the articles extracted may be minimized. Therefore, for example, the information processing apparatus 100 is capable of minimizing the number of articles extracted and inspected from any aspect, and reducing the money cost, electricity cost, resource cost, location cost, or time cost.

Although the case where there is one inspection facility is described herein, embodiments are not limited thereto. For example, multiple inspection facilities may be provided as appropriate. Although the case where there is one standby facility is described herein, embodiments are not limited thereto. For example, multiple standby facilities may be provided as appropriate. Although the case where there are four inspection aspects is described, embodiments are not limited thereto. For example, there may be three or less inspection aspects. For example, there may be five or more inspection aspects.

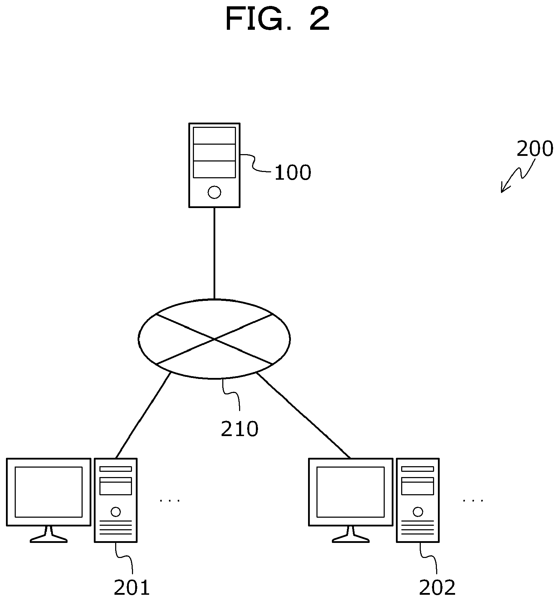

Although the case where the information processing apparatus 100 operates alone is described herein, embodiments are not limited thereto. For example, the information processing apparatus 100 may collaborate with another computer. For example, the functions as the information processing apparatus 100 may be implemented by multiple computers. An example of a case where the information processing apparatus 100 collaborates with another computer will be described later with reference to FIG. 2.

Although the case where the information processing apparatus 100 acquires the first information 101 by generating the first information 101 is described herein, embodiments are not limited thereto. For example, the information processing apparatus 100 may acquire the first information 101 by receiving the first information 101 from another computer that generates the first information 101. An example of this case will be described later with reference to FIG. 2.

Although the case where the information processing apparatus 100 acquires the second information 102 by generating the second information 102 is described herein, embodiments are not limited thereto. For example, the information processing apparatus 100 may acquire the second information 102 by receiving the second information 102 from another computer that generates the second information 102. An example of this case will be described later with reference to FIG. 2.

### (Example of Information Processing System 200)

Next, an example of an information processing system 200 to which the information processing apparatus 100 illustrated in FIG. 1 is applied will be described by using FIG. 2.

FIG. 2 is an explanatory diagram illustrating an example of the information processing system 200. In FIG. 2, the information processing system 200 includes the information processing apparatus 100, a simulation apparatus 201, and a client apparatus 202.

In the information processing system 200, the information processing apparatus 100 and the simulation apparatus 201 are coupled to each other via a wired or wireless network 210. The network 210 is, for example, a local area network (LAN), a wide area network (WAN), the Internet, or the like. In the information processing system 200, the information processing apparatus 100 and the client apparatus 202 are coupled to each other via the wired or wireless network 210.

(2-1) The information processing apparatus 100 receives, from the client apparatus 202, a creation instruction that requests creation of a plan to extract articles to be inspected from each aspect from a work facility. Upon receipt of the creation instruction, the information processing apparatus 100 transmits, to the simulation apparatus 201, a creation request that requests creation of the plan to extract articles to be inspected from each aspect from the work facility.

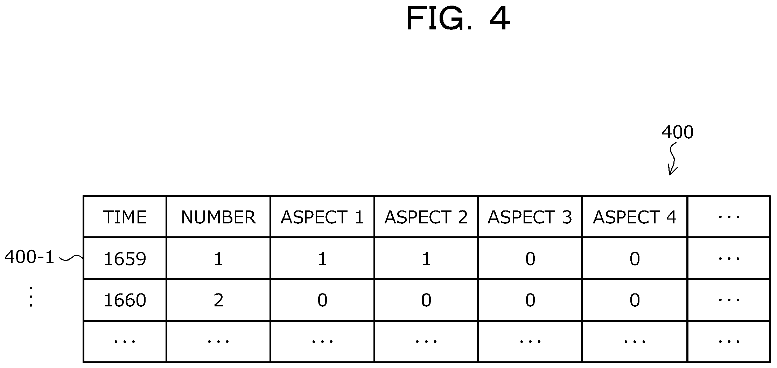

(2-2) As a result of transmitting the creation request, the information processing apparatus 100 receives work facility management information, inspection target management information, and inspection status management information from the simulation apparatus 201. The work facility management information is information specifying, for each time slot, an article extractable from the work facility and an aspect inspectable on the article in the time slot in association with each other. For example, the work facility management information is formed as a work facility management table 400 described later in FIG. 4.

The inspection target management information is information on a plan specifying, for each time slot, which article among multiple articles is to be extracted in the time slot and which aspect among the multiple aspects the article is to be inspected. For example, the inspection target management information corresponds to the first information 101 illustrated in FIG. 1. For example, the inspection target management information is formed as the inspection target management table 500 described later in FIG. 5.

The inspection status management information is information specifying, for each time slot, an article being inspected in the inspection facility, an article waiting for inspection in the standby facility, and an article not allowed to wait for inspection in the standby facility in the time slot. For example, the inspection status management information corresponds to the second information 102 illustrated in FIG. 1. For example, the inspection status management information is formed as the inspection status management table 600 described later in FIG. 6. Based on the received inspection status management information, the information processing apparatus 100 determines whether or not a first time slot in which an article not allowed to wait in the standby facility is generated exists among the multiple time slots.

(2-3) When the first time slot exists, the information processing apparatus 100 searches the multiple time slots for a second time slot which exists before the first time slot and in which the inspection facility is unoccupied based on the received inspection status management information. When the second time slot is searched out, the information processing apparatus 100 advances a time slot which exists after the second time slot among the multiple time slots and which is for extracting an article to be inspected from the first aspect based on the work facility management information and the inspection target management information received.

The information processing apparatus 100 reflects the result of the advancement in the received inspection target management information. The information processing apparatus 100 transmits, to the simulation apparatus 201, an update request which requests update of the inspection status management information and which contains the inspection target management information updated by the reflection. For example, the information processing apparatus 100 receives the updated inspection status management information from the simulation apparatus 201. Based on the updated inspection status management information, the information processing apparatus 100 determines again whether or not a first time slot in which an article not allowed to wait in the standby facility is generated exists among the multiple time slots.

(2-4) When the first time slot exists, the information processing apparatus 100 searches the multiple time slots for a second time slot which exists before the first time slot and in which the inspection facility is unoccupied based on the updated inspection status management information. When the second time slot is searched out, the information processing apparatus 100 advances a time slot which exists after the second time slot among the multiple time slots and is for extracting an article to be inspected from the first aspect based on the received work facility management information and the updated inspection target management information.

The information processing apparatus 100 reflects the result of the advancement in the received inspection target management information. The information processing apparatus 100 transmits, to the simulation apparatus 201, an update request which requests update of the inspection status management information and which contains the inspection target management information updated by the reflection. For example, the information processing apparatus 100 receives the updated inspection status management information from the simulation apparatus 201. Based on the updated inspection status management information, the information processing apparatus 100 determines again whether or not a first time slot in which an article not allowed to wait in the standby facility is generated exists among the multiple time slots. When the first time slot in which the article not allowed to wait in the standby facility is generated exists, the information processing apparatus 100 repeats the processing in (2-4).

(2-5) When any first time slot in which an article not allowed to wait in the standby facility is generated does not exist among the multiple time slots based on the received inspection status management information, the information processing apparatus 100 transmits a notification containing the inspection target management information to the client apparatus 202. In this way, the information processing apparatus 100 is capable of enabling a system user to grasp the plan to extract articles to be inspected from each aspect from the work facility. The information processing apparatus 100 is, for example, a server, a personal computer (PC), or the like.

The simulation apparatus 201 is a computer that generates the inspection status management information. The simulation apparatus 201 stores the work facility management information. The simulation apparatus 201 receives a creation request from the information processing apparatus 100. Upon receipt of the creation request, the simulation apparatus 201 generates the inspection target management information based on the work facility management information. The simulation apparatus 201 generates the inspection status management information based on the generated inspection target management information. The simulation apparatus 201 transmits the work facility management information, the inspection target management information, and the inspection status management information to the information processing apparatus 100.

The simulation apparatus 201 receives an update request from the information processing apparatus 100. Upon receipt of the update request, the simulation apparatus 201 updates the inspection status management information based on the inspection target management information contained in the update request. The simulation apparatus 201 transmits the updated inspection status management information to the information processing apparatus 100. For example, the simulation apparatus 201 is a server, a PC, or the like.

The client apparatus 202 is a computer used by the system user. The client apparatus 202 transmits a creation instruction to the information processing apparatus 100. The client apparatus 202 receives a notification containing the inspection target management information from the information processing apparatus 100. The client apparatus 202 outputs a notification containing the inspection target management information in a manner referable by the system user. The client apparatus 202 is, for example, a PC, a tablet terminal, a smartphone, or the like.

Although the case where the information processing apparatus 100 and the simulation apparatus 201 are different computers is described herein, embodiments are not limited thereto. For example, the information processing apparatus 100 may have the functions as the simulation apparatus 201 and operate as the simulation apparatus 201 as well.

Although the case where the information processing apparatus 100 and the client apparatus 202 are different computers is described herein, embodiments are not limited thereto. For example, the information processing apparatus 100 may have the functions as the client apparatus 202 and operate as the client apparatus 202 as well.

### (Hardware Configuration Example of Information Processing Apparatus 100)

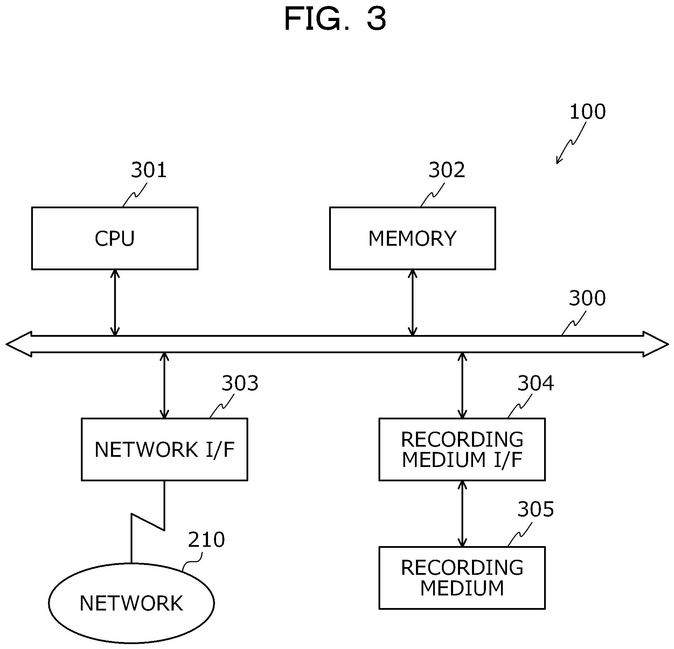

Next, a hardware configuration example of the information processing apparatus 100 will be described by using FIG. 3.

FIG. 3 is a block diagram illustrating a hardware configuration example of the information processing apparatus 100. In FIG. 3, the information processing apparatus 100 includes a central processing unit (CPU) 301, a memory 302, a network interface (I/F) 303, a recording medium I/F 304, and a recording medium 305. These components are coupled to each other through a bus 300.

The CPU 301 controls the entire information processing apparatus 100. The memory 302 includes, for example, a read-only memory (ROM), a random-access memory (RAM), a flash ROM, and the like. For example, the flash ROM or the ROM stores various programs, and the RAM is used as a work area of the CPU 301. When loaded by the CPU 301, the programs stored in the memory 302 cause the CPU 301 to execute coded processing.

The network I/F 303 is coupled to the network 210 through a communication line, and is coupled to another computer via the network 210. The network I/F 303 controls an interface between the network 210 and the inside of the information processing apparatus 100 so as to control inputs and outputs of data from and to the other computer. The network I/F 303 is, for example, a modem, a LAN adapter, or the like.

The recording medium I/F 304 controls reading and writing of data from and to the recording medium 305 under the control of the CPU 301. The recording medium I/F 304 is, for example, a disk drive, a solid-state drive (SSD), a Universal Serial Bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be removably attached to the information processing apparatus 100.

In addition to the components described above, the information processing apparatus 100 may include, for example, a keyboard, a mouse, a display, a printer, a scanner, a microphone, a speaker, and so on. The information processing apparatus 100 may include multiple recording medium I/Fs 304 and multiple recording media 305. The information processing apparatus 100 does not have to include the recording medium I/F 304 and the recording medium 305.

### (Information Stored in Work Facility Management Table 400)

Next, an example of information stored in the work facility management table 400 will be described with reference to FIG. 4. The work facility management table 400 is formed on a storage area such as the memory 302 or the recording medium 305 of the information processing apparatus 100 illustrated in FIG. 3, for example.

FIG. 4 is an explanatory diagram illustrating the example of the information stored in the work facility management table 400. As illustrated in FIG. 4, the work facility management table 400 has fields of time, number, and aspect n. Here, n is a given positive integer. In the example illustrated in FIG. 4, n is 1 to 4. In the work facility management table 400, for each time slot, information is set in each of the fields and thereby the work facility management information is stored as a record 400-a. Here, a is a given positive integer.

A number identifying a time slot is set in the field of time. A number identifying an article extractable from the work facility in the above time slot is set in the field of number. Flag information indicating whether or not the above article is inspectable from the aspect n is set in the field of aspect n. For example, when the flag information is 1, the flag information indicates that the inspection from the aspect n is possible. For example, when the flag information is 0, the flag information indicates that the inspection from the aspect n is not possible.

### (Information Stored in Inspection Target Management Table 500)

Next, an example of information stored in the inspection target management table 500 will be described with reference to FIG. 5. The inspection target management table 500 is formed on a storage area such as the memory 302 or the recording medium 305 of the information processing apparatus 100 illustrated in FIG. 3, for example.

FIG. 5 is an explanatory diagram illustrating the example of the information stored in the inspection target management table 500. As illustrated in FIG. 5, the inspection target management table 500 has fields of time, number, and aspect n. Here, n is a given positive integer. In the example illustrated in FIG. 5, n is 1 to 4. In the inspection target management table 500, for each time slot, information is set in each of the fields and thereby the inspection target management information is stored as a record 500-b. Here, b is a given integer.

A number identifying a time slot is set in the field of time. A number identifying an article extractable from the work facility in the above time slot is set in the field of number. Flag information indicating whether or not to extract the above article as an inspection target to be inspected from an aspect n is set in the field of aspect n. For example, when the flag information is 1, the flag information means to extract the article as an inspection target to be inspected from the aspect n. For example, when the flag information is 0, the flag information means not to extract the article as an inspection target to be inspected from the aspect n.

### (Information Stored in Inspection Status Management Table 600)

Next, an example of information stored of the inspection status management table 600 will be described with reference to FIG. 6. The inspection status management table 600 is formed on a storage area such as the memory 302 or the recording medium 305 of the information processing apparatus 100 illustrated in FIG. 3, for example.

FIG. 6 is an explanatory diagram illustrating the example of the information stored in the inspection status management table 600. As illustrated in FIG. 6, the inspection status management table 600 has fields of time, inspection facility i, standby facility j, and overflow. Here, i is a given positive integer. In the example illustrated in FIG. 6, i is 1. Here, j is a given positive integer. In the example illustrated in FIG. 6, j is 1 and 2. In the inspection status management table 600, for each time slot, information is set in each of the fields and thereby the inspection status management information is stored as a record 600-c. Here, c is a given integer.

A number identifying a time slot is set in the field of time. A number identifying an article being inspected in an i-th inspection facility in the above time slot is set in the field of inspection facility i. A specific number is set in the field of inspection facility i if there is no article being inspected in the i-th inspection facility in the above time slot. For example, the specific number is 0.

A number identifying an article waiting in a j-th standby facility in the above time slot is set in the field of standby facility j. A specific number is set in the field of standby facility j if there is no article waiting in the j-th standby facility in the above time slot. For example, the specific number is 0. A number identifying an article not allowed to wait in the above time slot because the standby facility is occupied is set in the field of overflow. A specific number is set in the field of overflow if there is not any article not allowed to wait in the above time slot. For example, the specific number is 0.

### (Hardware Configuration Example of Simulation Apparatus 201)

A hardware configuration example of the simulation apparatus 201 is, for example, the same as the hardware configuration example of the information processing apparatus 100 illustrated in FIG. 3, and thus description thereof is omitted herein.

### (Hardware Configuration Example of Client Apparatus 202)

A hardware configuration example of the client apparatus 202 is, for example, the same as the hardware configuration example of the information processing apparatus 100 illustrated in FIG. 3, and thus description thereof is omitted herein.

### (Functional Configuration Example of Information Processing Apparatus 100)

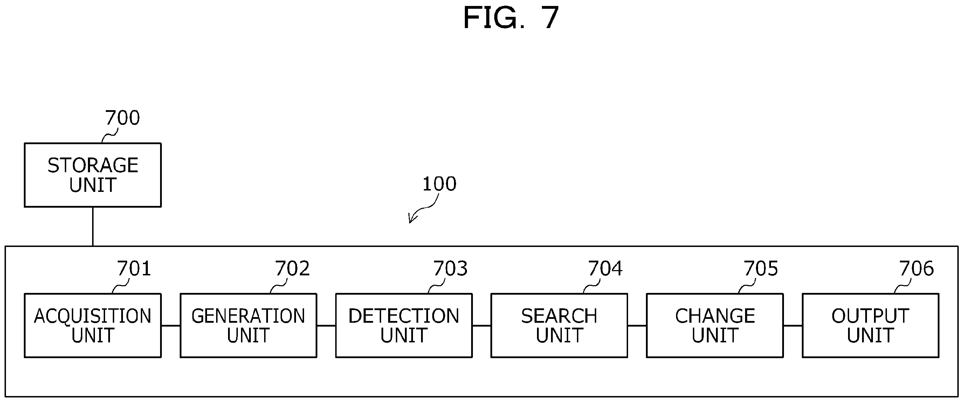

Next, a functional configuration example of the information processing apparatus 100 will be described by using FIG. 7.

FIG. 7 is a block diagram illustrating a functional configuration example of the information processing apparatus 100. In FIG. 7, the information processing apparatus 100 includes a storage unit 700, an acquisition unit 701, a generation unit 702, a detection unit 703, a search unit 704, a change unit 705, and an output unit 706.

The storage unit 700 is implemented by, for example, a storage area such as the memory 302 or the recording medium 305 illustrated in FIG. 3. Although the following description will be given of a case where the storage unit 700 is included in the information processing apparatus 100, embodiments are not limited thereto. For example, there may be a case where the storage unit 700 is included in an apparatus different from the information processing apparatus 100 and information stored in the storage unit 700 is referable by the information processing apparatus 100.

The acquisition unit 701 to the output unit 706 function as an example of a control unit. For example, the functions of the acquisition unit 701 to the output unit 706 are implemented by causing the CPU 301 to execute a program stored in a storage area such as the memory 302 or the recording medium 305, or by using the network I/F 303, as illustrated in FIG. 3. A processing result by each functional unit is stored in, for example, a storage area such as the memory 302 or the recording medium 305 illustrated in FIG. 3.

The storage unit 700 stores various types of information to be referred to or updated in the processing by the functional units. For example, the storage unit 700 stores inspection aspects. For example, the storage unit 700 stores one or more aspects. For example, the aspects are set in advance by the system user. For example, the aspects may be acquired by the acquisition unit 701.

For example, the storage unit 700 stores the number of inspection facilities. For example, the inspection facility is capable of inspecting an article from each of multiple aspects. For example, the number of inspection facilities is set in advance by the system user. For example, the number of inspection facilities may be acquired by the acquisition unit 701. For example, the storage unit 700 stores the number of standby facilities. For example, the number of standby facilities is set in advance by the system user. For example, the number of standby facilities may be acquired by the acquisition unit 701.

For example, the storage unit 700 stores association information in which an article extractable from the work facility in each time slot and an aspect inspectable on the article are associated with each other. For example, the association information corresponds to the work facility management table 400 illustrated in FIG. 4. For example, the storage unit 700 stores the work facility management table 400 illustrated in FIG. 4. For example, the association information is set in advance by the system user. For example, the association information may be acquired by the acquisition unit 701.

For example, the storage unit 700 stores, for each aspect, an upper limit of a time interval for extracting articles to be inspected from the concerned aspect from the work facility that sequentially handles multiple articles. For example, the upper limit may be a value common to two or more aspects. For example, the upper limit may be a different value for each aspect. For example, the upper limit is set in advance by the system user. For example, the upper limit may be acquired by the acquisition unit 701.

For example, the storage unit 700 stores first information. For example, the first information is information for each aspect with which time slots for extracting articles to be inspected from the concerned aspect from the work facility are identifiable among multiple consecutive time slots. For example, the first information specifies a plan to extract articles to be inspected from each aspect from the work facility. For example, the first information corresponds to the inspection target management table 500 illustrated in FIG. 5. For example, the storage unit 700 stores the inspection target management table 500 illustrated in FIG. 5. For example, the first information is generated by the generation unit 702. For example, the first information may be acquired by the acquisition unit 701.

For example, the storage unit 700 stores second information. For example, the second information is information with which an article being inspected in the inspection facility, an article waiting for inspection in the standby facility, and an article not allowed to wait for inspection in the standby facility in each of the multiple time slots are identifiable. For example, the second information corresponds to the inspection status management table 600 illustrated in FIG. 6. For example, the storage unit 700 stores the inspection status management table 600 illustrated in FIG. 6. For example, the second information is generated by the generation unit 702. For example, the second information may be acquired by the acquisition unit 701.

The acquisition unit 701 acquires various types of information to be used in the processing by the functional units. The acquisition unit 701 stores the acquired various types of information in the storage unit 700, or outputs the acquired various types of information to the functional units. The acquisition unit 701 may output the various types of information stored in advance in the storage unit 700 to the functional units. The acquisition unit 701 acquires the various types of information based on operations input by a user, for example. The acquisition unit 701 may receive the various types of information from an apparatus different from the information processing apparatus 100, for example.

For example, the acquisition unit 701 acquires a processing request. For example, the processing request may contain basic information such as inspection aspects, the number of inspection facilities, the number of standby facilities, the association information, and the upper limits. For example, the acquisition unit 701 acquires the processing request by receiving an input of the processing request based on an operation input by the user. For example, the acquisition unit 701 may acquire the processing request by receiving the processing request from another computer. For example, the other computer is the client apparatus 202.

For example, the acquisition unit 701 may acquire the basic information such as the inspection aspects, the number of inspection facilities, the number of standby facilities, the association information, and the upper limits. For example, the acquisition unit 701 acquires the basic information separately from the processing requests. For example, the acquisition unit 701 acquires the basic information by receiving an input of the basic information based on an operation input by the user. For example, the acquisition unit 701 may acquire the basic information by receiving the basic information from another computer. For example, the other computer is the simulation apparatus 201 or the like.

For example, the acquisition unit 701 acquires the first information. For example, in a case where the generation unit 702 does not generate the first information, the acquisition unit 701 acquires the first information. For example, the acquisition unit 701 acquires the first information by receiving an input of the first information based on an operation input by the user. For example, the acquisition unit 701 may acquire the first information by receiving the first information from another computer. For example, the other computer is the simulation apparatus 201.

For example, the acquisition unit 701 acquires the second information. For example, in a case where the generation unit 702 does not generate or update the second information, the acquisition unit 701 acquires the second information. For example, the second information is generated or updated based on the first information. For example, the acquisition unit 701 acquires the second information by receiving an input of the second information based on an operation input by the user. For example, the acquisition unit 701 may acquire the second information by receiving the second information from another computer. For example, the other computer is the simulation apparatus 201.

The acquisition unit 701 may receive a start trigger, upon receipt of which any of the functional units starts processing. For example, the start trigger is an input of a predetermined operation by the user. For example, the start trigger may be a reception of predetermined information from another computer. For example, the start trigger may be an output of predetermined information from any of the functional units.

For example, the acquisition unit 701 may recognize an acquisition of a processing request as a start trigger for starting the processing with the generation unit 702, the detection unit 703, the search unit 704, and the change unit 705. For example, the acquisition unit 701 may recognize an acquisition of the first information and the second information as a start trigger for starting the processing with the detection unit 703, the search unit 704, and the change unit 705.

The generation unit 702 generates the first information based on the basic information. For example, the generation unit 702 generates the first information by identifying, for each aspect, time slots for extracting articles to be inspected from the concerned aspect from the work facility among multiple time slots based on the basic information. In this processing, for example, it is preferable that the generation unit 702 identify time slots for extracting articles to be inspected from each aspect so that the time slots for extracting the articles to be inspected from different aspects may not coincide with each other.

For example, for each aspect, the generation unit 702 identifies one or more time slots for extracting articles to be inspected from the concerned aspect among the multiple time slots within a range in which the time interval for extracting the articles to be inspected from the concerned aspect does not exceed the upper limit. In this processing, for example, it is preferable that the generation unit 702 identify, for each aspect, one or more time slots for extracting articles to be inspected from the concerned aspect among the multiple time slots so that the number of extractions of the articles to be inspected from the concerned aspect may be minimized. In this way, the generation unit 702 is capable of generating a tentative plan to extract articles to be inspected from each aspect so as to suppress an increase in the cost of inspection and achieve appropriate quality control.

For example, the generation unit 702 may select each aspect from among the multiple aspects in ascending order of the number of inspectable articles. For example, every time an aspect is selected, the generation unit 702 identifies one or more time slots for extracting articles to be inspected from the concerned aspect among the multiple time slots within a range in which the time interval for extracting the articles to be inspected from the concerned aspect does not exceed the upper limit. In this processing, for example, it is preferable that, every time an aspect is selected, the generation unit 702 identify one or more time slots for extracting articles to be inspected from the concerned aspect among the multiple time slots so that the number of extractions of the articles to be inspected from the concerned aspect may be minimized. In this way, the generation unit 702 is capable of generating a tentative plan to extract articles to be inspected from each aspect so as to suppress an increase in the cost of inspection and achieve appropriate quality control. Since the generation unit 702 selects each aspect in ascending order of the number of inspectable articles, the time interval for extracting articles to be inspected from each aspect is less likely to exceed the upper limit.

The generation unit 702 acquires the second information based on the first information. For example, the generation unit 702 generates the second information by executing a simulation of extracting articles from the work facility and moving each of the extracted articles to the inspection facility or the standby facility in accordance with the plan specified in the first information. For example, the generation unit 702 generates the second information every time the generation unit 702 generates or acquires the first information. For example, the generation unit 702 may generate the second information every time the change unit 705 updates the first information. Accordingly, the generation unit 702 is capable of making identifiable the inspection status for each time slot, which is a guideline for updating the first information.

The detection unit 703 determines whether or not a first time slot in which an article not allowed to wait in the standby facility is generated exists among the multiple time slots based on the second information. For example, the detection unit 703 determines whether or not the first time slot exists based on the second information that is acquired by the acquisition unit 701, generated by the generation unit 702, or updated by the change unit 705. In this way, the detection unit 703 is capable of determining whether or not there is a risk of stopping the work facility in the plan specified in the first information, and determining whether or not to update the first information. For example, when the first time slot exists, the detection unit 703 is capable of determining to update the first information. For example, when the first time slot does not exist, the detection unit 703 is capable of determining that the first information does not have to be updated.

When the first time slot exists, the search unit 704 searches, based on the second information, the multiple time slots for a second time slot which exists before the first time slot and in which the inspection facility is unoccupied. For example, the search unit 704 searches for the second time slot based on the second information that is acquired by the acquisition unit 701, generated by the generation unit 702, or updated by the change unit 705. For example, when multiple first time slots exist, the search unit 704 may search a second time slot which exists before each of the first time slots. In this way, the search unit 704 may determine whether or not there is room for updating the first information. For example, when the second time slot is found, the search unit 704 determines that there is room for updating the first information. For example, when the second time slot is not found, the search unit 704 determines that there is no room for updating the first information.

When the second time slot is searched out, the change unit 705 updates the first information by advancing a time slot for extracting an article to be inspected from the first aspect included in the multiple aspects in the first information. For example, when the second time slot is searched out, the change unit 705 changes the first information such that a time slot which exists after the second time slot among the multiple time slots and is for extracting an article to be inspected from the first aspect is changed to a time slot before the second time slot.

For example, the change unit 705 changes the first information such that a time slot which exists after the second time slot and is for extracting an article to be inspected from the first aspect is changed to a time slot which is before the second time slot and closest to the second time slot and in which an article to be inspected from the same first aspect is extractable. In this way, the change unit 705 is capable of updating the first information, and reducing the risk of stopping the work facility in the plan specified in the updated first information.

When advancing a certain time slot for extracting an article to be inspected from the first aspect, the change unit 705 may update the first information by additionally advancing a different time slot which exists after the certain time slot and which is for extracting an article to be inspected from the same first aspect in the first information. For example, the change unit 705 changes the first information such that the different time slot which exists after the time slot already advanced and which is for extracting an article to be inspected from the first aspect is changed to a time slot before the different time slot. In this processing, for example, it is preferable that the change unit 705 change a different time slot for extracting an article to be inspected from the first aspect to a time slot before the different time slot in order that the time interval for extracting articles to be inspected from the first aspect may not exceed the upper limit. In this way, the change unit 705 is capable of enabling appropriate quality control in the plan specified in the updated first information.

When the second time slot is searched out, the change unit 705 calculates an index value for each of the aspects, the index value indicating how many times a time slot for extracting an article to be inspected from the concerned aspect is changed among the multiple time slots in order that the time interval for extracting articles to be inspected from the concerned aspect may not exceed the upper limit. The index value is, for example, the number of times that a time slot for extracting an article to be inspected from any of the aspects is changed. The index value may be, for example, the number of times that, when a time slot for extracting an article to be inspected from any of the aspects is advanced, a different time slot for extracting an article to be inspected from the concerned aspect is changed in order that the time interval for extracting articles to be inspected from the concerned aspect may not exceed the upper limit.

The change unit 705 selects an aspect with the smallest calculated index value. The change unit 705 changes the first information such that a time slot which exists after the second time slot among the multiple time slots and is for extracting an article to be inspected from the selected first aspect is changed to a time slot before the second time slot. The change unit 705 further changes a different time slot which exists after the time slot already advanced and is for extracting an article to be inspected from the selected first aspect to a time slot before the different time slot in order that the time interval for extracting articles to be inspected from the first aspect may not exceed the upper limit. In this way, the change unit 705 is capable updating the first information so as to suppress an increase in the cost of inspection.

When the cost of inspection from each aspect differs among the aspects, the change unit 705 may select the aspect with the lowest cost. The change unit 705 changes the first information such that a time slot which exists after the second time slot among the multiple time slots and is for extracting an article to be inspected from the selected first aspect is changed to a time slot before the second time slot. The change unit 705 further changes a different time slot which exists after the time slot already advanced and is for extracting an article to be inspected from the selected first aspect to a time slot before the different time slot in order that the time interval for extracting articles to be inspected from the first aspect may not exceed the upper limit. In this way, the change unit 705 is capable updating the first information so as to suppress an increase in the cost of inspection.

The output unit 706 outputs a processing result in at least any of the functional units. For example, the output is made in the form of display on a display, print output to a printer, transmission to an external apparatus through the network I/F 303, or storage in a storage area such as the memory 302 or the recording medium 305. Consequently, the output unit 706 is capable of notifying the user of the processing result in at least any of the functional units, and thus improving the convenience of the information processing apparatus 100.

The output unit 706 outputs, for example, the first information. For example, the output unit 706 outputs the first information updated by the change unit 705. For example, the output unit 706 transmits the first information updated by the change unit 705 to another computer. As a result, the output unit 706 enables the acquisition unit 701 to receive the second information corresponding to the updated first information from the other computer.

For example, when the detection unit 703 determines that the first information does not have to be updated, the output unit 706 outputs the first information. For example, the output unit 706 outputs the first information in a manner referable by the system user. For example, the output unit 706 may transmit the first information to the client apparatus 202. Consequently, the output unit 706 enables the system user to grasp a plan to extract articles to be inspected from each aspect so as to suppress an increase in the cost of inspection without stopping the work facility and to achieve appropriate quality control.

For example, when the search unit 704 determines that there is no room for updating the first information, the output unit 706 outputs the first information. For example, the output unit 706 outputs the first information in a manner referable by the system user. For example, the output unit 706 may transmit the first information to the client apparatus 202. Consequently, the output unit 706 enables the system user to grasp a plan to extract articles to be inspected from each aspect so as to suppress an increase in the cost of inspection and to achieve appropriate quality control.

Although the case where the information processing apparatus 100 includes the storage unit 700, the acquisition unit 701, the generation unit 702, the detection unit 703, the search unit 704, the change unit 705, and the output unit 706 in the above description, embodiments are not limited thereto. For example, the information processing apparatus 100 may not include any one of the functional units. For example, in a case where the information processing apparatus 100 cooperates with another computer including the generation unit 702, the information processing apparatus 100 does not have to include the generation unit 702. The following description will be mainly given of a case where the information processing apparatus 100 operates alone.

### (Operation Example of Information Processing Apparatus 100)

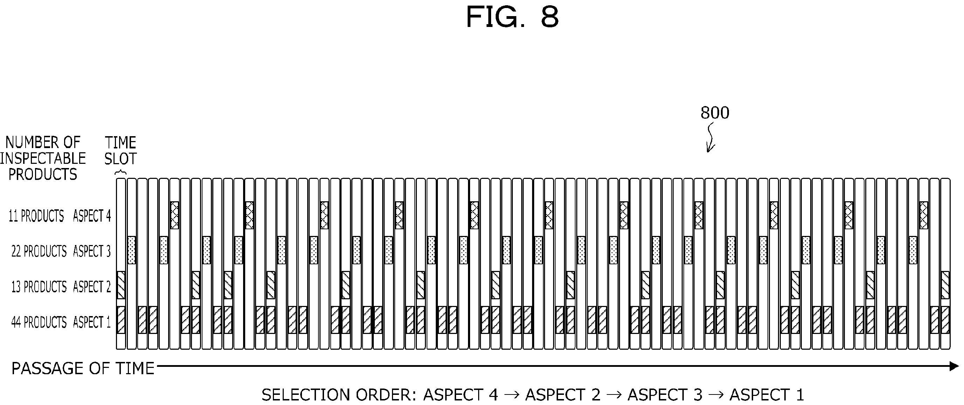

Next, an operation example of the information processing apparatus 100 will be described with reference to FIGs. 8 to 18. In the following description, the work facility is, for example, a production line. The production line is, for example, for producing products. The articles are, for example, the products. The products are to be inspected from aspects 1, 2, 3, and 4.

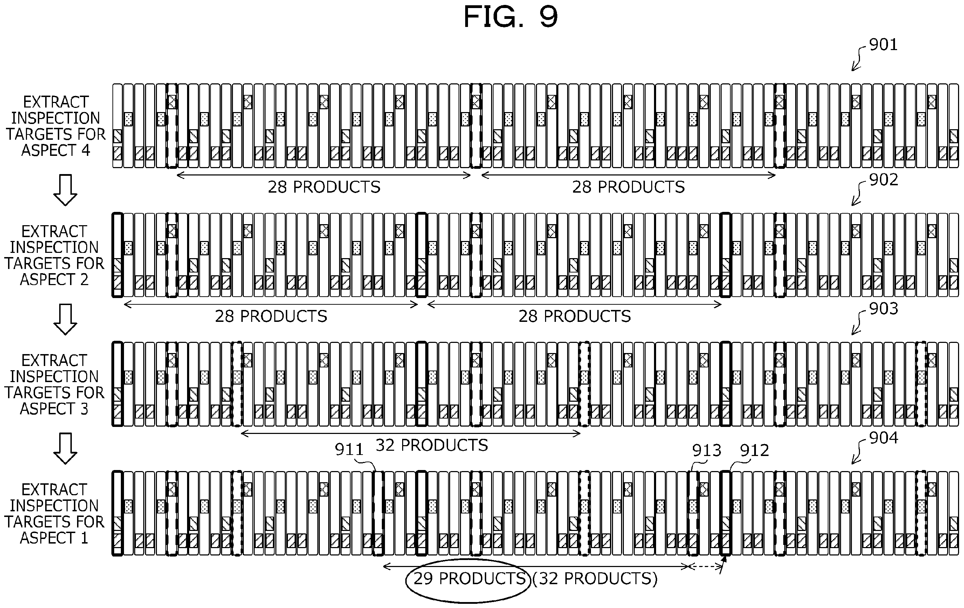

First, an example in which the information processing apparatus 100 determines time slots for extracting products to be inspected from each aspect will be described with reference to FIGs. 8 and 9, for example.

FIGs. 8 and 9 are explanatory diagrams illustrating an example of determining time slots for extracting products to be inspected from each aspect. In FIG. 8, the information processing apparatus 100 identifies, for each time slot based on the work facility management table 400, a product extractable in the time slot and an aspect inspectable on the concerned product among the aspects 1 to 4 as presented in reference sign 800. In reference sign 800, the aspects inspectable on the products are indicated by different types of hatches. For example, a downward-sloping hatch indicates the aspect 1. For example, an upward-sloping hatch indicates the aspect 2. For example, a dot hatch indicates the aspect 3. For example, a cross hatch indicates the aspect 4.

The information processing apparatus 100 calculates the number of inspectable products for each aspect based on the identified result. In the example illustrated in FIG. 8, the information processing apparatus 100 identifies 44 inspectable products for the aspect 1, 13 inspectable products for the aspect 2, 22 inspectable products for the aspect 3, and 11 inspectable products for the aspect 4.

Regarding the multiple aspects, it is considered that the larger the number of inspectable products for an aspect, the easier the adjustment of time slots for extracting the products to be inspected from the concerned aspect so that the time interval for extracting the products to be inspected from the concerned aspect may not exceed the upper limit. Therefore, it is considered preferable that the information processing apparatus 100 sequentially select each aspect in ascending order of the number of inspectable products from among the multiple aspects and determine time slots for extracting products to be inspected from the concerned aspect. In the example illustrated in FIG. 8, the ascending order of the number of inspectable products is the aspect 4 to the aspect 2 to the aspect 3 to the aspect 1. Next, the description continues with reference to FIG. 9.

As presented in reference sign 901 in FIG. 9, the information processing apparatus 100 selects the aspect 4 and determines time slots for extracting products to be inspected from the aspect 4 among multiple time slots so that the time interval for extracting the products to be inspected from the selected aspect 4 may not exceed the upper limit. In this processing, it is preferable that the information processing apparatus 100 determine the time slots for extracting the products to be inspected from the aspect 4 so that the number of extractions of the products to be inspected from the aspect 4 may be minimized. The upper limit is expressed by the number of products. In the example illustrated in FIG. 9, the upper limit is a time interval of 32 products. As presented in reference sign 901, the time interval for extracting the products to be inspected from the aspect 4 is a time interval of 28 products, and is equal to or shorter than the upper limit.

As presented in reference sign 902, the information processing apparatus 100 selects the aspect 2, and determines time slots for extracting products to be inspected from the aspect 2 among the multiple time slots in order that the time interval for extracting the products to be inspected from the selected aspect 2 may not exceed the upper limit. In this processing, the information processing apparatus 100 determines the time slots for extracting the products to be inspected from the aspect 2 so that the number of extractions of the products to be inspected from the aspect 2 may be minimized and the time slots for extracting the products to be inspected from the aspect 2 may not coincide with the time slots for extracting the products to be inspected from the aspect 4. As presented in reference sign 902, the time interval for extracting the products to be inspected from the aspect 2 is a time interval of 28 products, and is equal to or shorter than the upper limit.

As presented in reference sign 903, the information processing apparatus 100 selects the aspect 3, and determines time slots for extracting products to be inspected from the aspect 3 among the multiple time slots so that the time interval for extracting the products to be inspected from the selected aspect 3 may not exceed the upper limit. In this processing, the information processing apparatus 100 determines the time slots for extracting the products to be inspected from the aspect 3 so that the number of extractions of the products to be inspected from the aspect 3 may be minimized and the time slots for extracting the products to be inspected from the aspect 3 may not coincide with the time slots for extracting the products to be inspected from the aspects 2 and 4. As presented in reference sign 903, the time interval for extracting the products to be inspected from the aspect 3 is a time interval of 32 products, and is equal to or shorter than the upper limit.

As presented in reference sign 904, the information processing apparatus 100 selects the aspect 1, and determines time slots for extracting products to be inspected from the aspect 1 among the multiple time slots so that the time interval for extracting the products to be inspected from the selected aspect 1 may not exceed the upper limit. In this processing, the information processing apparatus 100 determines the time slots for extracting the products to be inspected from the aspect 1 so that the number of extractions of the products to be inspected from the aspect 1 may be minimized and the time slots for extracting the products to be inspected from the aspect 1 may not coincide with the time slots for extracting the products to be inspected from the aspects 2 to 4.

When a time slot 911, for example, is determined as a time slot for extracting a product to be inspected from the aspect 1, it is preferable that the farthest time slot 912 from the time slot 911 be determined as a next time slot for extracting a product to be inspected from the aspect 1 in order to minimize the number of extractions of the products. The time slot 912 is already determined as a time slot for extracting a product to be inspected from the aspect 2. For this reason, the information processing apparatus 100 determines a time slot 913 as the next time slot for extracting a product to be inspected from the aspect 1. As presented in reference sign 904, the time interval for extracting the products to be inspected from the aspect 1 is a time interval of 29 products, and is equal to or shorter than the upper limit.

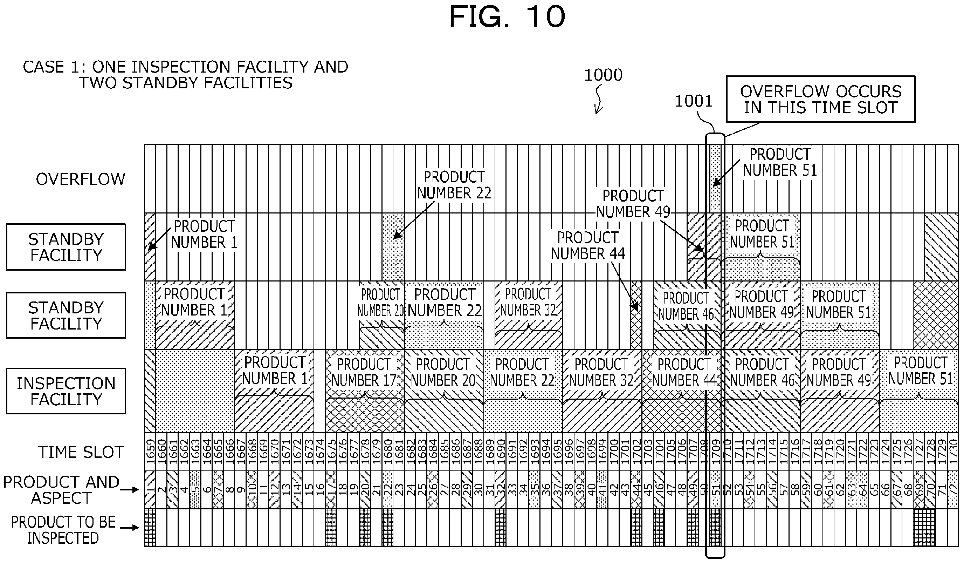

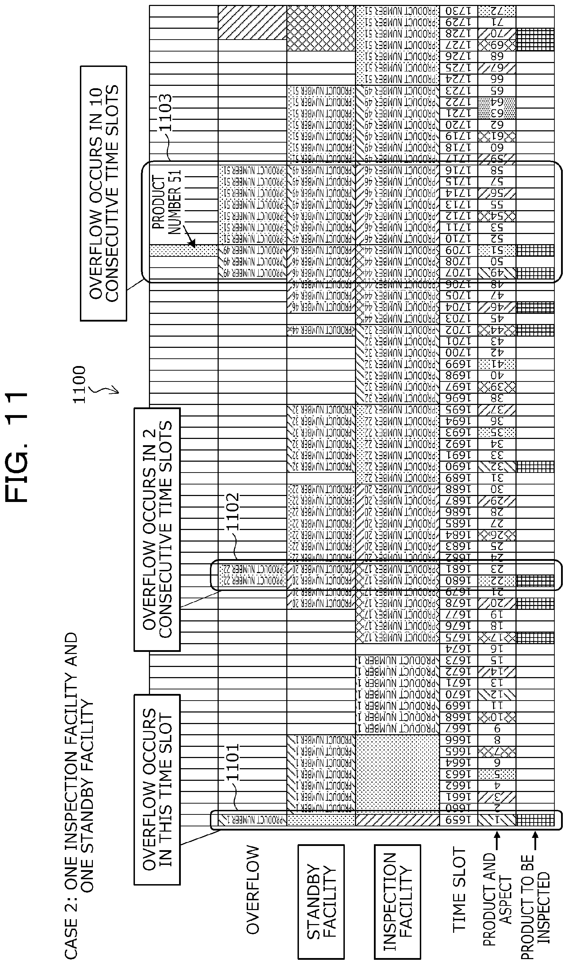

An example in which the information processing apparatus 100 detects a time slot in which an overflow occurs will be described with reference to FIGs. 10 and 11.

FIGs. 10 and 11 are explanatory diagrams illustrating examples of detecting time slots in which overflows occur. For example, FIG. 10 illustrates an example in which the information processing apparatus 100 detects a time slot in which an overflow occurs in a case 1 where there are one inspection facility and two standby facilities.

In FIG. 10, as similar to FIGs. 8 and 9, the information processing apparatus 100 determines time slots for extracting products to be inspected from the aspects 1 to 4 among multiple time slots as presented in the lower three rows in reference sign 1000. For example, the multiple time slots are time slots numbered 1659 to 1730. For example, the products are numbered 1 to 72, respectively.

In reference sign 1000, the aspects inspectable on the products are indicated by different types of hatches. For example, a downward-sloping hatch indicates the aspect 1. For example, an upward-sloping hatch indicates the aspect 2. For example, a dot hatch indicates the aspect 3. For example, a cross hatch indicates the aspect 4. A product extractable as an inspection target is indicated by, for example, a mesh hatch.

The information processing apparatus 100 determines time slots for extracting products to be inspected from the aspects 1 to 4 among the multiple time slots, and thereby generates a plan to extract the products to be inspected from the aspects 1 to 4. The information processing apparatus 100 stores the generated plan by using the inspection target management table 500.

Based on the inspection target management table 500, the information processing apparatus 100 executes a simulation of extracting the products from the production line and moving each of the products to any one of the inspection facility and the standby facilities in accordance with the generated plan. By executing the simulation, the information processing apparatus 100 identifies the inspection status in each time slot as presented in the upper five rows in reference sign 1000. The inspection status is represented by a number identifying a product being inspected, a number identifying a waiting product, and a number identifying an overflow product not allowed to wait for inspection. The information processing apparatus 100 stores the identified inspection status in each time slot by using the inspection status management table 600.

Based on the inspection status management table 600, the information processing apparatus 100 detects each time slot in which a product overflow occurs. If any time slot in which a product overflow occurs is not detected, the information processing apparatus 100 outputs the generated plan as a confirmed plan in a manner referable by the user. In this way, the information processing apparatus 100 enables the user to refer to the plan with which a product overflow will not occur and the production line will not have to be stopped. In the example illustrated in FIG. 10, the information processing apparatus 100 detects a time slot 1001 in which a product overflow occurs. Next, the description continues with reference to FIG. 11.

For example, FIG. 11 illustrates an example in which the information processing apparatus 100 detects time slots in which overflows occur in a case 2 where there are one inspection facility and one standby facility.

In FIG. 11, as similar to FIGs. 8 and 9, the information processing apparatus 100 determines time slots for extracting products to be inspected from the aspects 1 to 4 among multiple time slots, as presented in the lower three rows in reference sign 1100. For example, the multiple time slots are time slots numbered 1659 to 1730. For example, the products are numbered 1 to 72, respectively.

The information processing apparatus 100 determines time slots for extracting products to be inspected from the aspects 1 to 4 among the multiple time slots, and thereby generates a plan to extract the products to be inspected from the aspects 1 to 4. The information processing apparatus 100 stores the generated plan by using the inspection target management table 500.

Based on the inspection target management table 500, the information processing apparatus 100 executes a simulation of extracting the products from the production line and moving each of the products to the inspection facility or the standby facility in accordance with the generated plan. By executing the simulation, the information processing apparatus 100 identifies the inspection status in each time slot as presented in the upper five rows in reference sign 1100. The inspection status is represented by a number identifying a product being inspected, a number identifying a waiting product, and a number identifying an overflow product not allowed to wait for inspection. The information processing apparatus 100 stores the identified inspection status in each time slot by using the inspection status management table 600.

Based on the inspection status management table 600, the information processing apparatus 100 detects each time slot in which a product overflow occurs. If any time slot in which a product overflow occurs is not detected, the information processing apparatus 100 outputs the generated plan as a confirmed plan in a manner referable by the user. In this way, the information processing apparatus 100 enables the user to refer to the plan with which a product overflow will not occur and the production line will not have to be stopped.

In the example illustrated in FIG. 11, the information processing apparatus 100 detects time slots 1101 to 1103 in which product overflows occur. The time slot 1102 is a set of two time slots in which two products may be extracted. The time slot 1103 is a set of 10 time slots in which 10 products may be extracted.

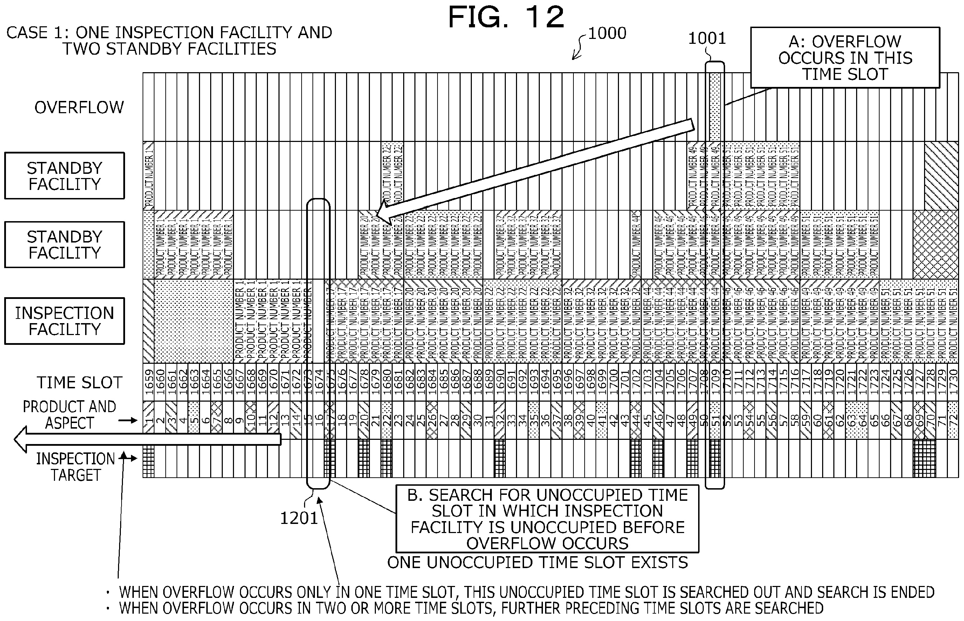

Next, an example in which the information processing apparatus 100 identifies an unoccupied time slot in which the inspection facility is unoccupied will be described with reference to FIG. 12. For example, the description will be given of an example in which the information processing apparatus 100 identifies an unoccupied time slot in which the inspection facility is unoccupied in the case 1.

FIG. 12 is an explanatory diagram illustrating an example of identifying an unoccupied time slot in which the inspection facility is unoccupied. In FIG. 12, the information processing apparatus 100 detects a time slot 1001 in which a product overflow occurs, and therefore searches the time slots before the time slot 1001 for an unoccupied time slot in which the inspection facility is unoccupied. In the example illustrated in FIG. 12, the information processing apparatus 100 searches out an unoccupied time slot 1201 in which the inspection facility is unoccupied.

When there are n or more consecutive time slots in which a product overflow occurs, the information processing apparatus 100 may search for n or more time slots in which the inspection facility is unoccupied. Here, n is equal to or greater than 2. The n or more time slots in which the inspection facility is unoccupied may not be consecutive with each other. For example, the information processing apparatus 100 searches the time slots before the n or more consecutive time slots in which the product overflow occurs, in a reverse chronological order to find unoccupied time slots in which the inspection facility is unoccupied until the number of time slots searched out becomes n or more.

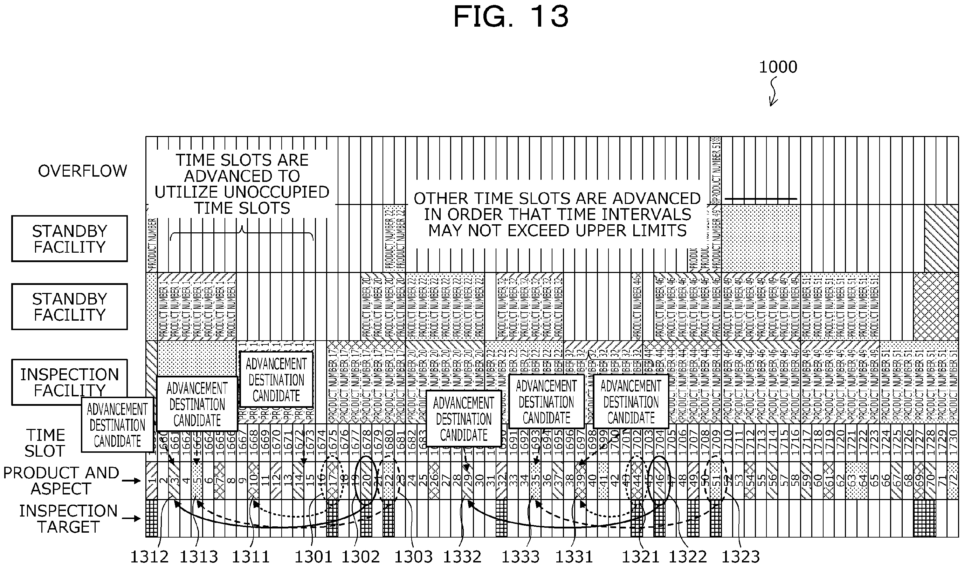

Next, an example in which the information processing apparatus 100 advances a time slot for extracting a product to be inspected from any aspect will be described with reference to FIGs. 13 to 18.

FIGs. 13 to 18 are explanatory diagrams illustrating an example of advancing time slots for extracting products to be inspected from any of the aspects. In FIG. 13, when an unoccupied time slot is searched out, the information processing apparatus 100 advances a time slot for extracting a product to be inspected from any aspect by using the searched-out unoccupied time slot and another time slot which exists before the searched-out unoccupied time slot and in which the standby facility is unoccupied. By advancing time slots for extracting products to be inspected from any of the aspects, the information processing apparatus 100 adjusts the plan such that no product overflow may occur.

For example, since an unoccupied time slot 1201 is searched out, the information processing apparatus 100 selects an advancement source candidate from the time slots after the unoccupied time slot 1201. The advancement source candidate is a time slot for extracting a product to be inspected from any aspect. For example, the information processing apparatus 100 selects, as the advancement source candidate, a time slot which exists after the unoccupied time slot 1201 and closest to the unoccupied time slot 1201 and which is for extracting a product to be inspected from each of the aspects. For example, the information processing apparatus 100 selects advancement source candidates 1301 to 1303.

For example, the information processing apparatus 100 may select an advancement source candidate from a predetermined range that exists after the unoccupied time slot 1201. For example, the predetermined range is a range including a predetermined number of time slots immediately after the unoccupied time slot 1201. For example, the information processing apparatus 100 may select a predetermined number of advancement source candidates from the time slots after the unoccupied time slot 1201. In the example illustrated in FIG. 13, the information processing apparatus 100 selects three advancement source candidates.

For example, the information processing apparatus 100 identifies an advancement destination candidate for each of the advancement source candidates among the time slots before the unoccupied time slot 1201. For example, the information processing apparatus 100 identifies, as an advancement destination candidate for an advancement source candidate, a time slot which exists before the unoccupied time slot 1201 and closest to the unoccupied time slot 1201 and in which a product to be inspected from the same aspect as in the advancement source candidate is extractable.

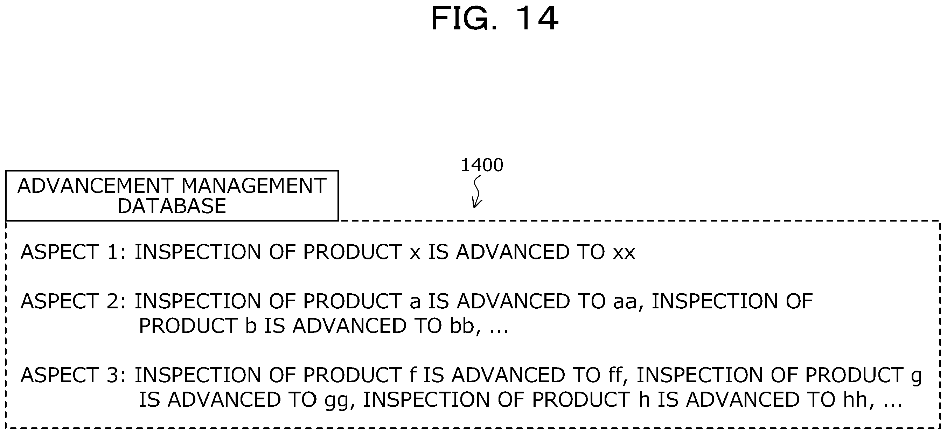

For example, the information processing apparatus 100 identifies advancement destination candidates 1311 to 1313 respectively for the advancement source candidates 1301 to 1303. For each aspect, the information processing apparatus 100 stores an advancement pair candidate including a combination of a selected advancement source candidate and an identified advancement destination candidate in an advancement management database 1400 described later in FIG. 14.

For each aspect, every time a time slot for extracting a product to be inspected from the concerned aspect is advanced from the advancement source candidate to the advancement destination candidate, the information processing apparatus 100 determines whether or not the time interval for extracting products to be inspected from the concerned aspect exceeds the upper limit. For each aspect, if the upper limit is exceeded, the information processing apparatus 100 additionally advances a time slot which exists after the time slot advanced this time and which is for extracting a product to be inspected from the concerned aspect.

For example, when a time slot for extracting a product to be inspected from the aspect 4 is advanced from the advancement source candidate 1301 to the advancement destination candidate 1311, the information processing apparatus 100 determines whether or not the resultant time interval between the time slot of the advancement destination candidate 1311 and a next time slot for extracting a product to be inspected from the aspect 4 exceeds the upper limit. For example, when determining that the upper limit is exceeded, the information processing apparatus 100 selects, as an advancement source candidate 1321, and advances the next time slot for extracting the product to be inspected from the aspect 4.

For example, the information processing apparatus 100 advances the next time slot for extracting the product to be inspected from the aspect 4 from the advancement source candidate 1321 to an advancement destination candidate 1331. The information processing apparatus 100 stores an advancement pair candidate including a combination of the advancement source candidate 1321 and the advancement destination candidate 1331 for the advancement source candidate 1321 in the advancement management database 1400 described later in FIG. 14.

Similarly, for example, the information processing apparatus 100 advances a next time slot for extracting a product to be inspected from the aspect 2 from an advancement source candidate 1322 to an advancement destination candidate 1332. The information processing apparatus 100 stores an advancement pair candidate including a combination of the advancement source candidate 1322 and the advancement destination candidate 1332 for the advancement source candidate 1322 in the advancement management database 1400 described later in FIG. 14.

Similarly, for example, the information processing apparatus 100 advances a next time slot for extracting a product to be inspected from the aspect 3 from an advancement source candidate 1323 to an advancement destination candidate 1333. The information processing apparatus 100 stores an advancement pair candidate including a combination of the advancement source candidate 1323 and the advancement destination candidate 1333 for the advancement source candidate 1323 in the advancement management database 1400 described later in FIG. 14. Next, the description continues with reference to FIG. 14.

An example of information stored in the advancement management database 1400 will be described with reference to FIG. 14. For example, as illustrated in FIG. 14, the advancement management database 1400 stores advancement pairs for each of the aspects 1 to 3. For example, an advancement pair is expressed by using a pair of the number of a product to be extracted in an advancement source candidate and the number of a product to be extracted in an advancement destination candidate. For example, the advancement pair is expressed as "the inspection of (the number of the product to be extracted in the advancement source candidate) is advanced to (the number of the product to be extracted in the advancement destination candidate)".

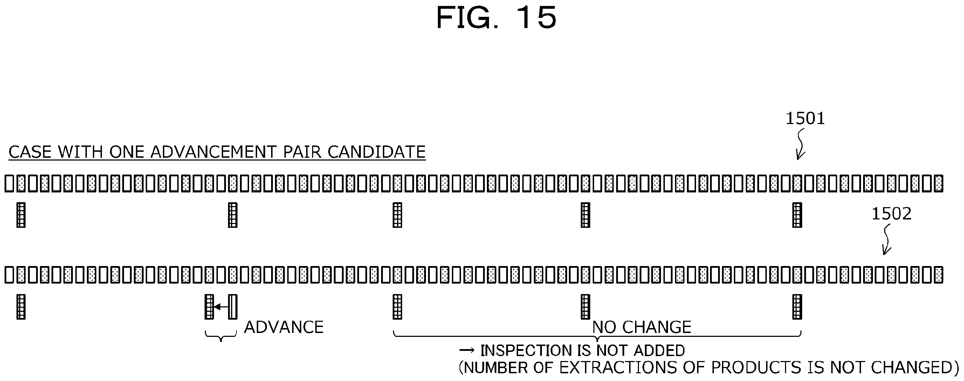

In the example illustrated in FIG. 14, there is one advancement pair candidate for the aspect 1. There are two or more advancement pair candidates for the aspect 2. There are three or more advancement pair candidates for the aspect 3. Based on the advancement management database 1400, the information processing apparatus 100 selects which one of the multiple aspects is targeted for advancing a time slot for extracting a product to be inspected. The description continues with reference to FIG. 15, and a case where the information processing apparatus 100 selects an aspect for which there is one advancement pair candidate will be described.

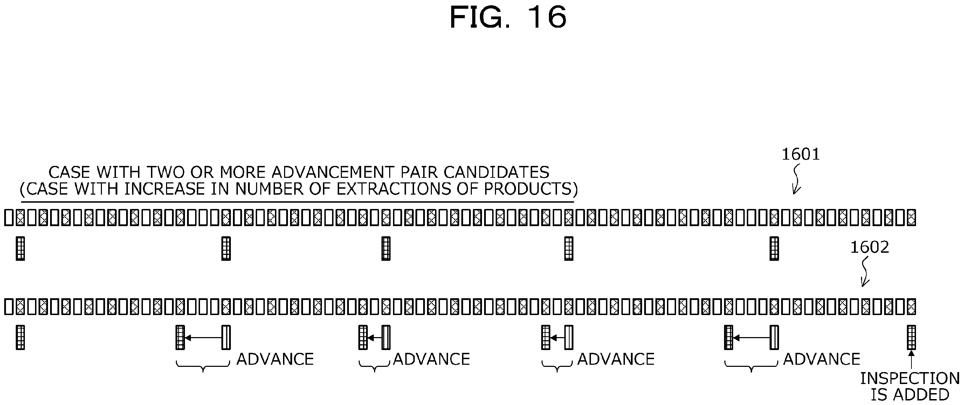

In FIG. 15, reference sign 1501 presents a state depicting how products to be inspected from a selected aspect are to be extracted before the information processing apparatus 100 advances a time slot for extracting a product to be inspected from the selected aspect. Reference sign 1502 presents a state depicting how products to be inspected from the selected aspect are to be extracted after the information processing apparatus 100 advances the time slot for extracting the product to be inspected from the selected aspect. As presented in reference signs 1501 and 1502, when there is one advancement pair candidate, the number of extractions of the products to be inspected from the selected aspect seems not to increase. Next, the description continues with reference to FIG. 16, and a case where the information processing apparatus 100 selects an aspect for which there are two or more advancement pair candidates will be described.

In FIG. 16, reference sign 1601 indicates a state depicting how products to be inspected from a selected aspect are to be extracted before the information processing apparatus 100 advances time slots for extracting products to be inspected from the selected aspect. Reference sign 1602 presents a state depicting how products to be inspected from the selected aspect are to be extracted after the information processing apparatus 100 advances the time slots for extracting the products to be inspected from the selected aspect. As presented in reference signs 1601 and 1602, when there are two or more advancement pair candidates, there seems to be a risk that the number of extractions of the products to be inspected from the selected aspect increases.

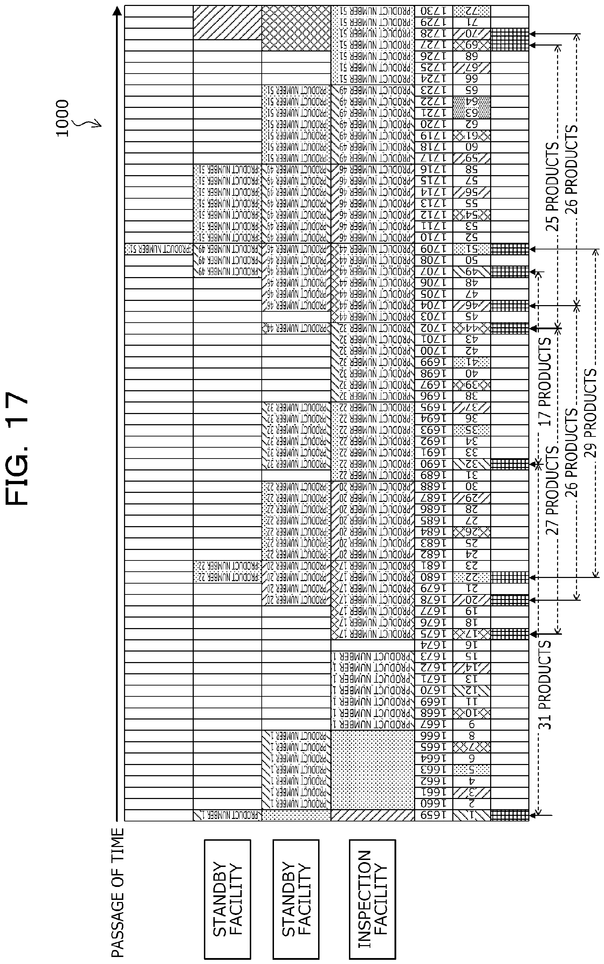

It is considered that a smaller number of advancement pair candidates have less influence on the already-determined time slots for extracting the products to be inspected from the aspects 1 to 4 and cause smaller changes in the inspection statuses. For this reason, it is considered that, for a smaller number of advancement pair candidates, it is easier to control the risk that a product overflow newly occurs. Accordingly, when the information processing apparatus 100 selects which one of the multiple aspects is targeted for advancing time slots for extracting products to be inspected based on the advancement management database 1400, it is considered preferable that the information processing apparatus 100 select the aspect with the smallest number of advancement pair candidates. Next, the description continues with reference to FIG. 17.

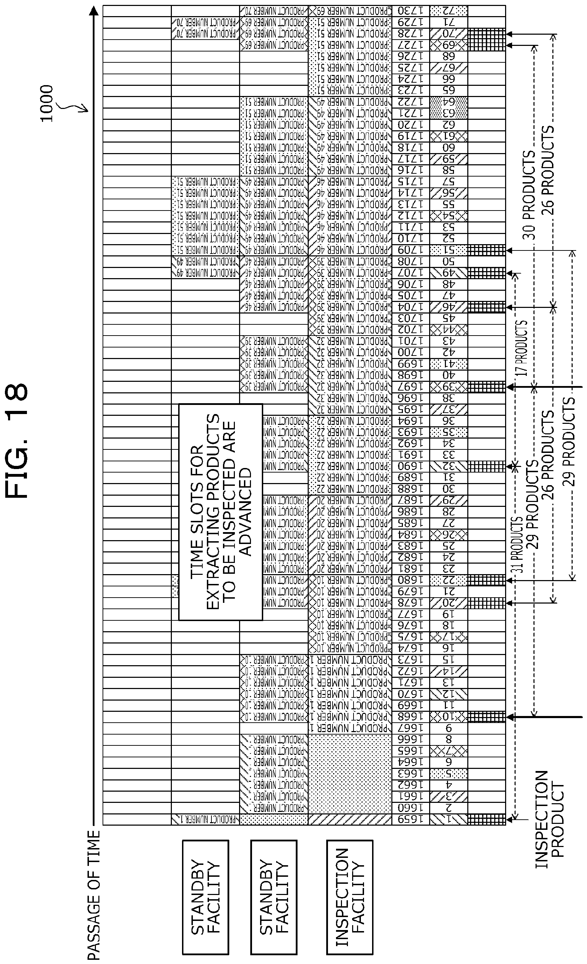

In FIG. 17, the information processing apparatus 100 generates advancement pair candidates and stores the advancement pair candidates in the advancement management database 1400 as illustrated in FIG. 14, and selects the aspect 4. The example in FIG. 17 illustrates a state before the information processing apparatus 100 advances time slots for extracting products to be inspected from the aspect 4. As illustrated in FIG. 17, although the time interval for extracting the products to be inspected from each aspect does not exceed the upper limit, there is a problem that an overflow product is generated. Thick arrows indicate time slots to be advanced. Next, the description continues with reference to FIG. 18.

The example in FIG. 18 illustrates a state after the information processing apparatus 100 advances the time slots for extracting the products to be inspected from the aspect 4. As illustrated in FIG. 18, even when advancing the time slots, the information processing apparatus 100 is capable of maintaining a state in which the time interval for extracting the products to be inspected from each aspect does not exceed the upper limit. The information processing apparatus 100 is capable of getting rid of a time slot in which an overflow product is generated. Thick arrows indicate time slots advanced.

In this way, the information processing apparatus 100 is capable of appropriately controlling the time slots for extracting the products to be inspected from each aspect from the production line so that the time interval for extracting the products to be inspected from the aspect from the production line may not exceed the upper limit without stopping the production line. Consequently, the information processing apparatus 100 is capable of suppressing an increase in the money cost, electricity cost, resource cost, location cost, or time cost due to the stopping of the production line. The information processing apparatus 100 is capable of enabling appropriate control of the time interval for extracting the products to be inspected from each aspect from the production line, and thereby enabling appropriate quality control of the products.

Although the description is given of the case where there is one inspection facility and the inspection facility is capable of performing inspection from all the aspects, embodiments are not limited thereto. For example, there may be a case where there are multiple inspection facilities, and the inspection facilities are capable of performing inspection from different aspects.

### (Procedure of Overall Processing)

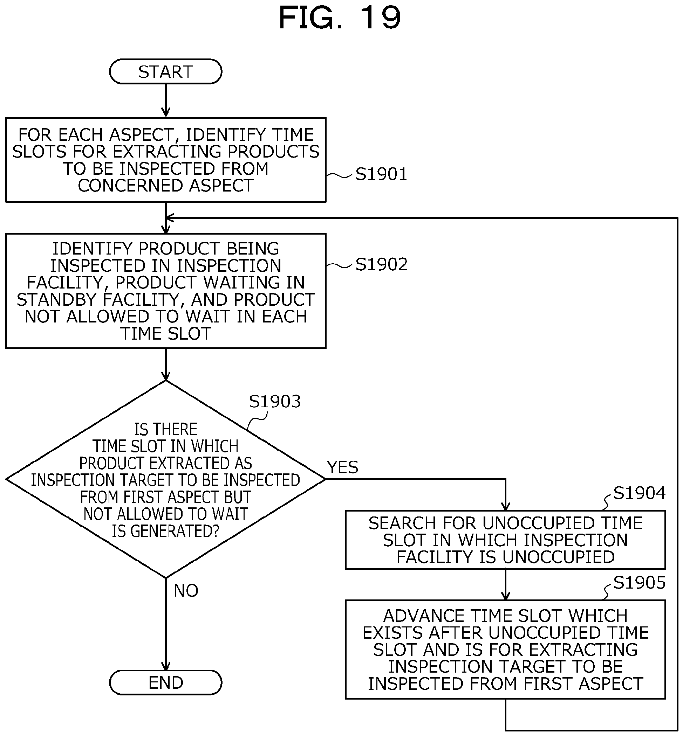

Next, an example of a procedure of an overall processing executed by the information processing apparatus 100 will be described by using FIG. 19. The overall processing is implemented, for example, by the CPU 301, the storage area such as the memory 302 or the recording medium 305, and the network I/F 303 illustrated in FIG. 3.

FIG. 19 is a flowchart illustrating an example of the procedure of the overall processing. In FIG. 19, the information processing apparatus 100 identifies, for each aspect, time slots for extracting products to be inspected from the concerned aspect among multiple time slots based on the work facility management table 400, and generates the inspection target management table 500 (step S1901).

Next, the information processing apparatus 100 identifies a product being inspected in the inspection facility, a product waiting in the standby facility, and a product not allowed to wait in each time slot based on the inspection target management table 500, and generates the inspection status management table 600 (step S1902).

The information processing apparatus 100 determines, based on the inspection status management table 600, whether or not a time slot in which a product extracted as an inspection target to be inspected from a first aspect but not allowed to wait is generated exists among the multiple time slots (step S1903). When any time slot in which a product not allowed to wait is generated does not exist (step S1903: No), the information processing apparatus 100 ends the overall processing. On the other hand, when a time slot in which a product not allowed to wait is generated exists (step S1903: Yes), the information processing apparatus 100 proceeds to the processing at step S1904.

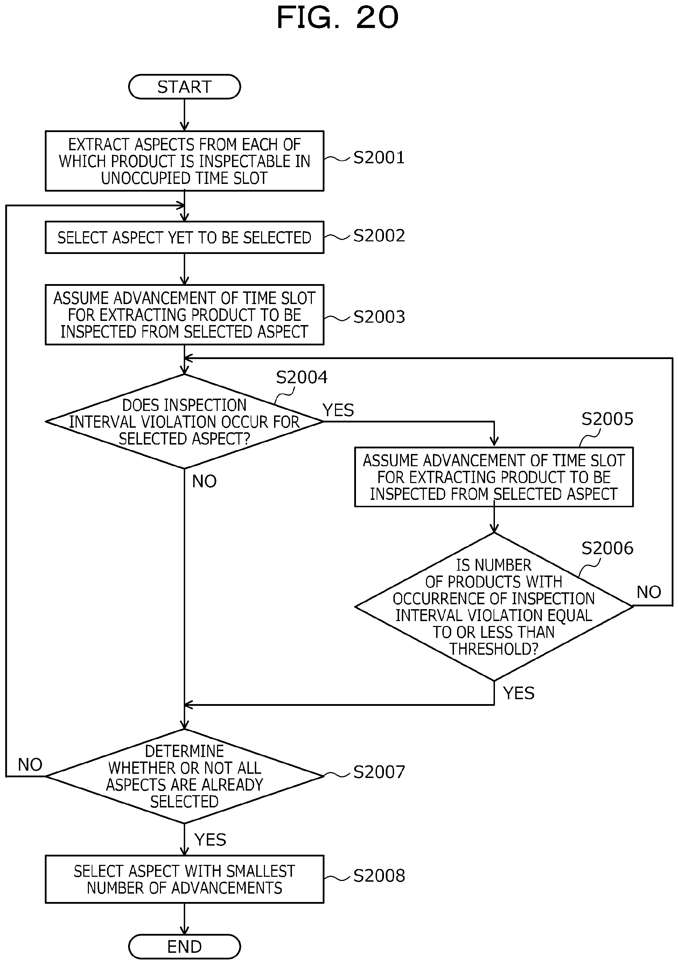

At step S1904, the information processing apparatus 100 searches the multiple time slots for an unoccupied time slot in which the inspection facility is unoccupied and which exists before the time slot in which the product not allowed to wait is generated (step S1904). The information processing apparatus 100 advances a time slot which exists after the searched-out unoccupied time slot and is for extracting an inspection target to be inspected from the first aspect among the multiple time slots to another time slot before the searched-out unoccupied time slot (step S1905). For example, the information processing apparatus 100 advances the time slot for extracting the inspection target to be inspected from the first aspect by executing an adjustment processing described later in FIG. 20. The information processing apparatus 100 returns to the processing at step S1902.

### (Procedure of Adjustment Processing)

Next, an example of a procedure of the adjustment processing executed by the information processing apparatus 100 will be described with reference to FIG. 20. The adjustment processing is implemented, for example, by the CPU 301, the storage area such as the memory 302 or the recording medium 305, and the network I/F 303 illustrated in FIG. 3.

FIG. 20 is a flowchart illustrating an example of the procedure of the adjustment processing. In FIG. 20, the information processing apparatus 100 extracts, from among multiple aspects, a predetermined number of aspects from each of which a product is inspectable in the searched-out unoccupied time slot, in ascending order of a time gap between the time slot in which the inspectable product exists and the searched-out unoccupied time slot (step S2001).

After that, the information processing apparatus 100 selects an aspect yet to be selected from among the extracted aspects (step S2002). The information processing apparatus 100 assumes an advancement of a time slot which exists after and closest to the selected-out unoccupied time slot and which is for extracting a product to be inspected from the selected aspect (step S2003). The information processing apparatus 100 adds information on the assumed advancement to the advancement management database 1400 in association with the selected aspect.

Based on the advancement management database 1400, the information processing apparatus 100 determines whether or not an inspection interval violation occurs for the selected aspect as a result of the assumed one or more advancements (step S2004). The inspection interval violation is that the time interval for extracting products to be inspected from the selected aspect exceeds the upper limit. When the inspection interval violation does not occur (step S2004: No), the information processing apparatus 100 proceeds to processing at step S2007. On the other hand, when the inspection interval violation occurs (step S2004: Yes), the information processing apparatus 100 proceeds to processing at step S2005.

At step S2005, the information processing apparatus 100 assumes an advancement of a time slot which exists after and closest to the time slot immediately previously assumed to be advanced and which is for extracting a product to be inspected from the selected aspect (step S2005). The information processing apparatus 100 adds information on the assumed advancement to the advancement management database 1400 in association with the selected aspect.

The information processing apparatus 100 determines whether or not the number of products with the occurrence of the inspection interval violation after the time slot immediately previously assumed to be advanced is equal to or smaller than a threshold (step S2006). When the number of products is equal to or smaller than the threshold (step S2006: Yes), the information processing apparatus 100 proceeds to the processing at step S2007. On the other hand, when the number of products is greater than the threshold (step S2006: No), the information processing apparatus 100 returns to the processing at step S2004.

At step S2007, the information processing apparatus 100 determines whether or not all the extracted aspects are already selected (step S2007). When there is an aspect yet to be selected (step S2007: No), the information processing apparatus 100 returns to the processing at step S2002. On the other hand, when all the aspects are already selected (step S2007: Yes), the information processing apparatus 100 proceeds to processing at step S2008.

At step S2008, the information processing apparatus 100 selects the aspect with the smallest number of advancements based on the advancement management database 1400, and advances the time slots for extracting the products to be inspected from the selected aspect (step S2008). The information processing apparatus 100 ends the adjustment processing. In this way, the information processing apparatus 100 is capable of controlling the time slots for extracting the products to be inspected from the selected aspect so as not to stop the work facility.

As described above, for each aspect, the information processing apparatus 100 is capable of acquiring the first information with which the time slots for extracting articles to be inspected from the concerned aspect from the work facility that sequentially handles multiple articles are identifiable among multiple consecutive time slots. The information processing apparatus 100 is capable of acquiring the second information with which an article being inspected in the inspection facility, an article waiting for inspection in the standby facility, and an article not allowed to wait for inspection in the standby facility in each of the multiple time slots are identifiable. Based on the acquired second information, when a first time slot in which an article not allowed to wait in the standby facility is generated exists among the multiple time slots, the information processing apparatus 100 is capable of searching for a second time slot which exists before the first time slot and in which the inspection facility is unoccupied. When the second time slot is searched out, the information processing apparatus 100 is capable of changing the first information such that a certain time slot which exists after the second time slot among the multiple time slots and which is for extracting an article to be inspected from any aspect is changed to a time slot before the second time slot. In this way, the information processing apparatus 100 is capable of appropriately controlling the time slots for extracting the articles to be inspected from each aspect from the work facility so as not to stop the work facility. Thus, the information processing apparatus 100 is capable of suppressing an increase in the cost due to the stopping of the work facility.

The information processing apparatus 100 is capable of generating the first information for each aspect by identifying one or more time slots for extracting articles to be inspected from the concerned aspect among the multiple time slots within a range in which the time interval for extracting the articles to be inspected from the concerned aspect does not exceed the upper limit. In this processing, for each aspect, the information processing apparatus 100 is capable of identifying one or more time slots for extracting articles to be inspected from the concerned aspect among the multiple time slots so that the number of extractions of the articles to be inspected from the concerned aspect may be minimized. Accordingly, the information processing apparatus 100 is capable of appropriately controlling the time slots for extracting the articles to be inspected from each aspect from the work facility so that the time interval for extracting the articles to be inspected from the aspect from the work facility may not exceed the upper limit without stopping the work facility. For this reason, the information processing apparatus 100 is capable of enabling appropriate quality control of the articles.

The information processing apparatus 100 is capable of selecting each aspect from among multiple aspects in ascending order of the number of inspectable articles. The information processing apparatus 100 is capable of identifying one or more time slots for extracting the articles to be inspected from the selected aspect so that the number of extractions of the articles to be inspected from the concerned aspect may be minimized within a range in which the time interval for extracting the articles to be inspected from the concerned aspect does not exceed the upper limit. Accordingly, the information processing apparatus 100 is capable of making it easy to identify one or more time slots for extracting the articles to be inspected from each aspect.

The information processing apparatus 100 is capable of acquiring the second information updated based on the first information after the time slot for extracting the article to be inspected from any of the aspects is changed. Based on the updated second information, when the first time slot exists among the multiple time slots, the information processing apparatus 100 is capable of searching for the second time slot which exists before the first time slot. Accordingly, the information processing apparatus 100 is capable of repeatedly updating the first information, and making it easy to appropriately control the time slots for extracting the articles to be inspected from each aspect from the work facility.

The information processing apparatus 100 is capable of updating the second information based on the first information after the time slot for extracting the article to be inspected from any of the aspects is changed. Thus, the information processing apparatus 100 is capable of operating alone.

Based on the acquired second information, when multiple first time slots in which articles not allowed to wait in the standby facility are generated exist among the multiple time slots, the information processing apparatus 100 is capable of searching a second time slot which exists before each of the first time slots. Accordingly, even when the multiple first time slots exist, the information processing apparatus 100 is capable of appropriately controlling the time slots for extracting the articles to be inspected from each aspect from the work facility.

When the second time slot is searched out, the information processing apparatus 100 is capable of changing the first information such that a certain time slot which exists after the second time slot among the multiple time slots and which is for extracting an article to be inspected from any aspect is changed to a time slot before the second time slot. In this processing, the information processing apparatus 100 is capable of additionally changing a different time slot which exists after the certain time slot and which is for extracting an article to be inspected from the concerned aspect to a time slot before the different time slot in order that the time interval for extracting the articles to be inspected from the concerned aspect may not exceed the upper limit. Accordingly, the information processing apparatus 100 is capable of appropriately controlling the time slots for extracting the articles to be inspected from each aspect from the work facility so that the time interval for extracting the articles to be inspected from the aspect from the work facility may not exceed the upper limit. For this reason, the information processing apparatus 100 is capable of enabling appropriate quality control of the articles.

When the second time slot is searched out, the information processing apparatus 100 is capable of calculating, for each aspect, the number of times that a different time slot for extracting an article to be inspected from the concerned aspect is changed in order that the time interval for extracting the articles to be inspected from the concerned aspect may not exceed the upper limit. The information processing apparatus 100 is capable of selecting any of the aspects having the smallest calculated number of times. The information processing apparatus 100 is capable of changing the first information such that a time slot which exists after the second time slot among the multiple time slots and which is for extracting an article to be inspected from the selected aspect is changed to a time slot before the second time slot. In this processing, the information processing apparatus 100 is capable of additionally changing a different time slot which exists after the certain time slot and which is for extracting an article to be inspected from the concerned aspect to a time slot before the different time slot in order that the time interval for extracting the articles to be inspected from the concerned aspect may not exceed the upper limit. Accordingly, the information processing apparatus 100 is capable of minimizing the number of articles to be inspected and thereby suppressing an increase in the cost of inspection.

The information processing method described in the embodiment may be implemented by causing a computer, such as a personal computer (PC) or a workstation, to execute a program prepared in advance. The information processing program described in the embodiment is recorded on a computer-readable recording medium and is read from the recording medium and is executed by the computer. The recording medium is a hard disk, a flexible disk, a compact disc (CD)-ROM, a magnetooptical (MO) disk, a Digital Versatile Disc (DVD), or the like. The information processing program described in the embodiment may be distributed via a network, such as the Internet.

## Claims

1. An information processing program that causes at least one computer to execute a process, the process comprising:
acquiring first information for specifying, for each of a plurality of inspection aspects, time slots for extracting articles to be inspected from an inspection aspect from a work facility that sequentially handles a plurality of articles among a plurality of consecutive time slots;
acquiring second information for specifying, in each of the plurality of time slots, an article being inspected in an inspection facility, an article waiting for inspection in a standby facility, and an article not allowed to wait in the standby facility;
when a first time slot in which there is an article not allowed to wait in the standby facility exists among the plurality of time slots based on the acquired second information, searching for a second time slot which exists before the first time slot and in which the inspection facility is unoccupied; and
when the second time slot is searched out, changing, in the first information, a time slot after the second time slot for extracting an article to be inspected from one of the plurality of inspection aspects among the plurality of time slots, into a time slot before the second time slot.

2. The information processing program according to claim 1, wherein
the acquiring the first information includes generating the first information based on an inspection aspect inspectable on each of the plurality of articles and an article extractable in each of the time slots among the plurality of articles by identifying, for each of the plurality of inspection aspects, one or more time slots for extracting articles to be inspected from the inspection aspect among the plurality of time slots so that the number of extractions of the articles to be inspected from the inspection aspect is minimized within a range in which a time interval for extracting the articles to be inspected from the inspection aspect does not exceed an upper limit.

3. The information processing program according to claim 1 or 2, wherein
the acquiring the first information includes generating the first information based on an inspection aspect inspectable on each of the plurality of articles and an article extractable in each of the time slots by identifying, for each of the plurality of inspection aspects in ascending order of the number of inspectable articles, one or more time slots for extracting articles to be inspected from the inspection aspect among the plurality of time slots so that the number of extractions of the articles to be inspected from the inspection aspect is minimized within a range in which a time interval for extracting the articles to be inspected from the inspection aspect does not exceed an upper limit.

4. The information processing program according to any one of claims 1 to 3, wherein
the second information is updated based on the first information after a time slot for extracting an article to be inspected from one of the plurality of inspection aspects is changed, and
the searching includes searching for the second time slot before the first time slot when the first time slot exists among the plurality of time slots based on the updated second information.

5. The information processing program according to any one of claims 1 to 4, wherein the process further comprising
updating the second information based on the first information after a time slot for extracting an article to be inspected from one of the plurality of inspection aspects is changed.

6. The information processing program according to any one of claims 1 to 5, wherein the searching includes
when there is a plurality of first time slots in each of which an article not allowed to wait in the standby facility among the plurality of time slots based on the acquired second information, searching the second time slot which exists before each of the first time slots.

7. The information processing program according to any one of claims 1 to 6, wherein the changing includes
changing a third time slot which exists after the changed time slot and which is for extracting an article to be inspected from the inspection aspect to a time slot before the third time slot in order that the time interval for extracting articles to be inspected from the inspection aspect does not exceed an upper limit.

8. The information processing program according to claim 7, the process further comprising:
acquiring, for each of the plurality of inspection aspects, the number of times for changing the third time slot in order that the time interval for extracting the articles to be inspected from the inspection aspect does not exceed the upper limit; and
selecting an inspection aspect that has the smallest acquired number of times among the plurality of inspection aspects,
wherein the changing includes:
changing, in the first information, a time slot after the second time slot for extracting an article to be inspected from the selected inspection aspect among the plurality of time slots, into a time slot before the second time slot; and
changing a fourth time slot after the changed time slot and which is for extracting an article to be inspected from the inspection aspect to a time slot before the fourth time slot in order that the time interval for extracting articles to be inspected from the selected inspection aspect does not exceed an upper limit.

9. An information processing apparatus comprising:
a control unit configured to:
acquire first information for specifying, for each of a plurality of inspection aspects, time slots for extracting articles to be inspected from an inspection aspect from a work facility that sequentially handles a plurality of articles among a plurality of consecutive time slots,
acquire second information for specifying, in each of the plurality of time slots, an article being inspected in an inspection facility, an article waiting for inspection in a standby facility, and an article not allowed to wait in the standby facility,
when a first time slot in which there is an article not allowed to wait in the standby facility exists among the plurality of time slots based on the acquired second information, search for a second time slot which exists before the first time slot and in which the inspection facility is unoccupied, and
when the second time slot is searched out, change, in the first information, a time slot after the second time slot for extracting an article to be inspected from one of the plurality of inspection aspects among the plurality of time slots, into a time slot before the second time slot.

10. The information processing apparatus according to claim 9, wherein the control unit is further configured to
generate the first information based on an inspection aspect inspectable on each of the plurality of articles and an article extractable in each of the time slots among the plurality of articles by identifying, for each of the plurality of inspection aspects, one or more time slots for extracting articles to be inspected from the inspection aspect among the plurality of time slots so that the number of extractions of the articles to be inspected from the inspection aspect is minimized within a range in which a time interval for extracting the articles to be inspected from the inspection aspect does not exceed an upper limit.

11. The information processing apparatus according to claim 9 or 10, wherein the control unit is further configured to
generate the first information based on an inspection aspect inspectable on each of the plurality of articles and an article extractable in each of the time slots by identifying, for each of the plurality of inspection aspects in ascending order of the number of inspectable articles, one or more time slots for extracting articles to be inspected from the inspection aspect among the plurality of time slots so that the number of extractions of the articles to be inspected from the inspection aspect is minimized within a range in which a time interval for extracting the articles to be inspected from the inspection aspect does not exceed an upper limit.

12. An information processing method for a computer to execute a process comprising:
acquiring first information for specifying, for each of a plurality of inspection aspects, time slots for extracting articles to be inspected from an inspection aspect from a work facility that sequentially handles a plurality of articles among a plurality of consecutive time slots;
acquiring second information for specifying, in each of the plurality of time slots, an article being inspected in an inspection facility, an article waiting for inspection in a standby facility, and an article not allowed to wait in the standby facility;
when a first time slot in which there is an article not allowed to wait in the standby facility exists among the plurality of time slots based on the acquired second information, searching for a second time slot which exists before the first time slot and in which the inspection facility is unoccupied; and
when the second time slot is searched out, changing, in the first information, a time slot after the second time slot for extracting an article to be inspected from one of the plurality of inspection aspects among the plurality of time slots, into a time slot before the second time slot.

13. The information processing method according to claim 12, wherein
the acquiring the first information includes generating the first information based on an inspection aspect inspectable on each of the plurality of articles and an article extractable in each of the time slots among the plurality of articles by identifying, for each of the plurality of inspection aspects, one or more time slots for extracting articles to be inspected from the inspection aspect among the plurality of time slots so that the number of extractions of the articles to be inspected from the inspection aspect is minimized within a range in which a time interval for extracting the articles to be inspected from the inspection aspect does not exceed an upper limit.

14. The information processing method according to claim 12 or 13, wherein
the acquiring the first information includes generating the first information based on an inspection aspect inspectable on each of the plurality of articles and an article extractable in each of the time slots by identifying, for each of the plurality of inspection aspects in ascending order of the number of inspectable articles, one or more time slots for extracting articles to be inspected from the inspection aspect among the plurality of time slots so that the number of extractions of the articles to be inspected from the inspection aspect is minimized within a range in which a time interval for extracting the articles to be inspected from the inspection aspect does not exceed an upper limit.
